(19)

Europäisches
Patentamt
European
Patent Office
Office européen
des brevets

(11) **EP 4 629 596 A1**

(12) **EUROPEAN PATENT APPLICATION**
published in accordance with Art. 153(4) EPC

(43) Date of publication:
**08.10.2025 Bulletin 2025/41**

(21) Application number: **24818364.2**

(22) Date of filing: **10.04.2024**

(51) International Patent Classification (IPC):
**H04L 65/80** *(2022.01)*

(86) International application number:
**PCT/CN2024/086929**

(87) International publication number:
**WO 2024/250827 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 CN 202310676826**

(71) Applicant: **Tencent Technology (Shenzhen)
Company Limited
Shenzhen, Guangdong 518057 (CN)**

(72) Inventor: **WU, Bo
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **TRAFFIC DATA TRANSMISSION METHOD AND APPARATUS, COMPUTER DEVICE,
COMPUTER-READABLE STORAGE MEDIUM, AND COMPUTER PROGRAM PRODUCT**

(57)   This application relates to a data transmission method and apparatus, a computer device, a computer-readable storage medium, and a computer program product. The method may be applied to an application scenario in which data transmission is performed on a vehicle-mounted terminal, a cloud server, a blockchain node, or another device, and includes: querying for, in a process of receiving media stream data, a buffer time of the media stream data (202); encapsulating the buffer time in an acknowledgement packet to obtain a target acknowledgement packet (204); transmitting the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter (206); and receiving the lost media packet transmitted by the server based on the adjusted retransmission parameter (208).

FIG. 1

FIG. 2a

**Description**

RELATED APPLICATION

This application claims priority to Chinese Patent Application No. 2023106768269, entitled "DATA TRANSMISSION METHOD AND APPARATUS, COMPUTER DEVICE, COMPUTER-READABLE STORAGE MEDIUM, AND COMPUTER PROGRAM PRODUCT" filed with the China National Intellectual Property Administration on June 8, 2023, which is incorporated by reference in its entirety.

FIELD OF THE TECHNOLOGY

This application relates to the field of computer technologies, and in particular, to a data transmission method and apparatus, a computer device, a computer-readable storage medium, and a computer program product.

BACKGROUND OF THE DISCLOSURE

With the development of computer technologies and Internet technologies, user-side quality of experience (QoE) is an important basis for measuring quality of service (QoS) of different cloud service providers, and effective improvement of quality of user experience is a goal currently pursued by various cloud platforms.

Current data transmission manners mainly focus on the following two aspects: Firstly, congestion control algorithms better adjusting network environments and service types, such as Bottleneck Bandwidth and Round-trip propagation time (BBR), are researched, designed, and deployed. A core idea of these methods is to attempt to "accurately" identify whether a current network is congested, and if congestion occurs, adjust the congestion problem in time, to expect that packet loss does not occur any more or occurs as little as possible during subsequent traffic transmission. Secondly, from the perspective of protocol innovation, a latest network transmission protocol is designed, and traffic transmission efficiency is improved by using inherent advantages of the protocol. For example, for multipath transmission, a traffic transmission path is added to accelerate flow completion time, which may significantly improve user-side service experience in most scenarios. In the foregoing solutions, a transmission policy is adjusted from the perspective of network congestion, to achieve an objective of reducing a packet loss rate and improving data transmission efficiency. Service experience on a user terminal side cannot be fully considered. That is, in an actual case, sometimes even if the packet loss rate is high during traffic transmission, service experience of a user terminal is not necessarily poor. A key factor affecting the service experience on the user terminal side is whether network packet loss occurring is recovered in time within a period of time. If the network packet loss occurring cannot be recovered in time, characteristics such as frame freezing and black screen that seriously affect user experience may appear in the service experience on the user terminal side, for example, audio and video playback. Therefore, how to quickly and effectively recover network packet loss without affecting the service experience on the user terminal side becomes a problem that needs to be resolved urgently.

SUMMARY

According to various embodiments of this application, a data transmission method and apparatus, a computer device, a computer-readable storage medium, and a computer program product are provided.

According to a first aspect, this application provides a data transmission method. The method is performed by a terminal. The method includes: querying for, in a process of receiving media stream data transmitted by a server is received, a buffer time of the media stream data; encapsulating the buffer time in an acknowledgement packet to obtain a target acknowledgement packet; transmitting the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter; and receiving the lost media packet transmitted by the server based on the adjusted retransmission parameter.

According to a second aspect, this application further provides a data transmission apparatus. The apparatus includes: a query module, configured to query for, in a process of receiving media stream data, a buffer time of the media stream data; an encapsulation module, configured to encapsulate the buffer time in an acknowledgement packet to obtain a target acknowledgement packet; a transmitting module, configured to transmit the target acknowledgement packet to the server, to cause the server to adjust, when determining that packet loss occurs in the media stream data, a retransmission parameter based on a recovery time of the packet loss and the buffer time in the target acknowledgement packet, and transmit, before recovering the media stream data, a lost media packet based on the retransmission parameter; and a receiving module, configured to receive the lost media packet transmitted by the server based on the adjusted retransmission parameter.

According to a third aspect, this application further provides a computer device. The computer device includes a memory and a processor. The memory stores a computer program. The processor, when executing the computer program, implements the following operations: querying for, in a process of receiving media stream data, a buffer time of the media stream data; encapsulating the buffer time in an acknowledgement packet to obtain a target acknowledgement packet; transmitting the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter; and receiving the lost media packet transmitted by the server based on the adjusted retransmission parameter.

According to a fourth aspect, this application further provides a computer-readable storage medium. The computer-readable storage medium has a computer program stored therein. When the computer program is executed by a processor, the following operations are implemented: querying for, in a process of receiving media stream data, a buffer time of the media stream data; encapsulating the buffer time in an acknowledgement packet to obtain a target acknowledgement packet; transmitting the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter; and receiving the lost media packet transmitted by the server based on the adjusted retransmission parameter.

According to a fifth aspect, this application further provides a computer program product. The computer program product includes a computer program. When the computer program is executed by a processor, the following operations are implemented: querying for, in a process of receiving media stream data, a buffer time of the media stream data; encapsulating the buffer time in an acknowledgement packet to obtain a target acknowledgement packet; transmitting the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter; and receiving the lost media packet transmitted by the server based on the adjusted retransmission parameter.

According to a sixth aspect, this application provides a data transmission method. The method is performed by a server. The method includes: receiving, in a process of transmitting media stream data to a terminal, a target acknowledgement packet returned by the terminal; the target acknowledgement packet carrying a buffer time of the terminal for the media stream data; adjusting, when it is determined based on the target acknowledgement packet that packet loss occurs in the media stream data, a retransmission parameter based on a recovery time of the packet loss and the buffer time in the target acknowledgement packet; and transmitting, according to the adjusted retransmission parameter, a lost media packet corresponding to the media stream data, so that the terminal receives the lost media packet before recovering the media stream data.

According to a seventh aspect, this application further provides a data transmission apparatus. The apparatus includes: a receiving module, configured to receive, in a process of transmitting media stream data to a terminal, a target acknowledgement packet returned by the terminal; the target acknowledgement packet carrying a buffer time of the terminal for the media stream data; an adjustment module, configured to adjust, when it is determined based on the target acknowledgement packet that packet loss occurs in the media stream data, a retransmission parameter based on a recovery time of the packet loss and the buffer time in the target acknowledgement packet; and a transmission module, configured to transmit, according to the adjusted retransmission parameter, a lost media packet corresponding to the media stream data, so that the terminal receives the lost media packet before recovering the media stream data.

According to an eighth aspect, this application further provides a computer device. The computer device includes a memory and a processor. The memory stores a computer program. The processor, when executing the computer program, implements the following operations: receiving, in a process of transmitting media stream data to a terminal, a target acknowledgement packet returned by the terminal; the target acknowledgement packet carrying a buffer time of the terminal for the media stream data; adjusting, when it is determined based on the target acknowledgement packet that packet loss occurs in the media stream data, a retransmission parameter based on a recovery time of the packet loss and the buffer time in the target acknowledgement packet; and transmitting, according to the retransmission parameter, a lost media packet corresponding to the media stream data, so that the terminal receives the lost media packet before recovering the media stream data.

According to a ninth aspect, this application further provides a computer-readable storage medium. The computer-readable storage medium has a computer program stored therein. When the computer program is executed by a processor, the following operations are implemented: receiving, in a process of transmitting media stream data to a terminal, a target acknowledgement packet returned by the terminal; the target acknowledgement packet carrying a buffer time of the terminal for the media stream data; adjusting, when it is determined based on the target acknowledgement packet that packet loss occurs in the media stream data, a retransmission parameter based on a recovery time of the packet loss and the buffer time in the target acknowledgement packet; and transmitting, according to the retransmission parameter, a lost media packet corresponding to the media stream data, so that the terminal receives the lost media packet before recovering the media stream data.

According to a tenth aspect, this application further provides a computer program product. The computer program product includes a computer program. When the computer program is executed by a processor, the following operations are implemented: receiving, in a process of transmitting media stream data to a terminal, a target acknowledgement packet returned by the terminal; the target acknowledgement packet carrying a buffer time of the terminal for the media stream data; adjusting, when it is determined based on the target acknowledgement packet that packet loss occurs in the media stream data, a retransmission parameter based on a recovery time of the packet loss and the buffer time in the target acknowledgement packet; and transmitting, according to the adjusted retransmission parameter, a lost media packet corresponding to the media stream data, so that the terminal receives the lost media packet before recovering the media stream data.

Details of one or more embodiments of this application are provided in the accompanying drawings and descriptions below. Other features and advantages of this application become clear with reference to the specification, the accompanying drawings, and the claims.

BRIEF DESCRIPTION OF THE DRAWINGS

FIG. 1 is a diagram of an application environment of a data transmission method according to an embodiment.

FIG. 2a is a schematic flowchart of a data transmission method according to an embodiment.

FIG. 2b is a schematic flowchart of a data transmission method according to another embodiment.

FIG. 3 is a schematic diagram of an application status information table of a user terminal according to an embodiment.

FIG. 4 is a schematic diagram of a user terminal periodically acquiring buffer information of an application receiving queue according to an embodiment.

FIG. 5 is a schematic flowchart of an operation of determining buffer information based on media stream data in an application receiving queue according to an embodiment.

FIG. 6 is a schematic flowchart of a data transmission method according to another embodiment.

FIG. 7 is a schematic diagram of packet loss and user-side frame freezing according to an embodiment.

FIG. 8 is a schematic flowchart of an adaptive packet loss recovery and traffic transmission method based on multi-party collaboration according to an embodiment.

FIG. 9 is a schematic diagram of an overall process of an adaptive packet loss recovery and traffic transmission method based on multi-party collaboration according to an embodiment.

FIG. 10 is a schematic diagram of a data transmitting end adjusting a bitrate according to an embodiment.

FIG. 11 is a structural block diagram of a data transmission apparatus according to an embodiment.

FIG. 12 is a structural block diagram of a data transmission apparatus according to another embodiment.

FIG. 13 is a diagram of an internal structure of a computer device according to an embodiment.

DESCRIPTION OF EMBODIMENTS

To make the objectives, technical solutions, and advantages of this application clearer, the following further describes this application in detail with reference to the accompanying drawings and the embodiments. Specific embodiments described herein are only intended to explain this application, and are not intended to limit this application.

In the following description, the terms "first, second, and third" are merely intended to distinguish similar objects and do not represent a specific order of objects. The specific order or sequence of "first, second, and third" may be interchanged with permission, so that the embodiments of this application described herein may be implemented in an order other than those illustrated or described herein.

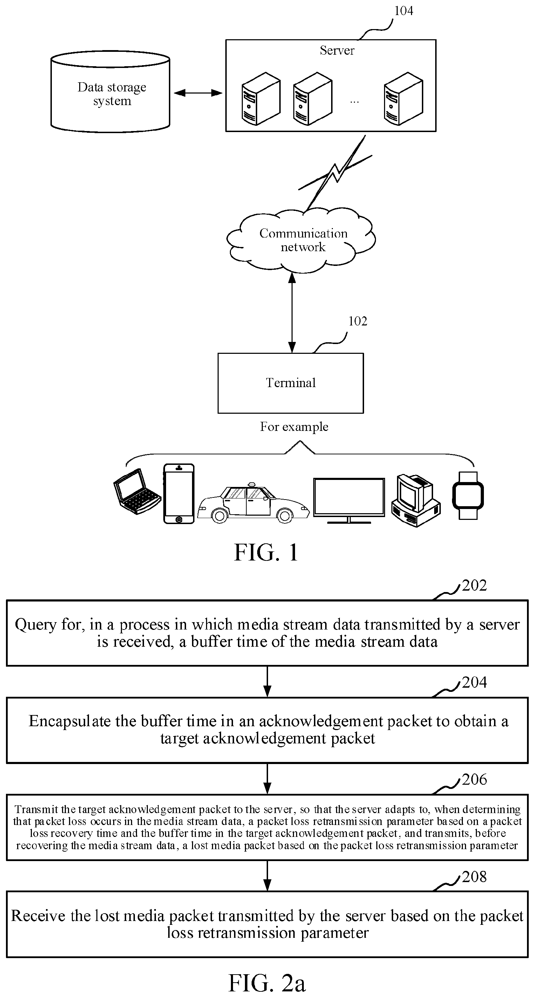

A data transmission method provided in an embodiment of this application may be applied to an application environment shown in FIG. 1. A terminal 102 communicates with a server 104 by using a network. A data storage system may store data that the server 104 needs to process. The data storage system may be integrated in the server 104 or may be placed on a cloud or another network server. When the terminal 102 receives media stream data transmitted by the server 104, the terminal 102 queries for a buffer time of the media stream data, and encapsulates the buffer time in an acknowledgement packet to obtain a target acknowledgement packet. The terminal 102 transmits the target acknowledgement packet to the server 104, so that when the server 104 determines that packet loss occurs in the media stream data, the server 104 adjusts a retransmission parameter based on a recovery time of the packet loss and the buffer time in the target acknowledgement packet, and transmits, before recovering the media stream data, a lost media packet based on the retransmission parameter. The terminal 102 receives the lost media packet transmitted by the server 104 based on the retransmission parameter.

The terminal 102 may be a smartphone, a tablet computer, a notebook computer, a desktop computer, a smart speaker, a smart watch, an Internet of things device, or a portable wearable device. The Internet of things device may be a smart speaker, a smart television, a smart air conditioner, a smart vehicle-mounted device, or the like. The portable wearable device may be a smart watch, a smart band, a head-mounted device, or the like.

The server 104 may be an independent physical server, or may be a serving node in a blockchain system. A peer to peer (P2P) network is formed between serving nodes in the blockchain system. A P2P protocol is an application-layer protocol running over a transmission control protocol (TCP).

In addition, the server 104 may alternatively be a server cluster including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The terminal 102 and the server 104 may be connected in a communication connection manner such as Bluetooth, a universal serial bus (USB), or a network, which is not limited in this application.

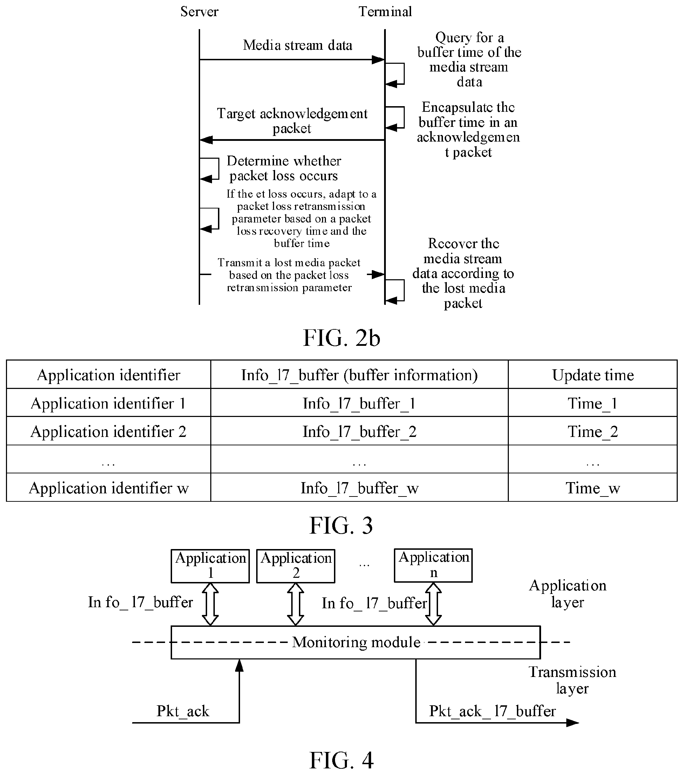

In an embodiment, as shown in FIG. 2a and FIG. 2b, a data transmission method is provided. The method may be performed by a server or a terminal alone or by the server and the terminal together. A description is provided based on an example in which the method is applied to the terminal in FIG. 1, including the following operations:

Operation 202: Query for, in a process of receiving stream data, a buffer time of the media stream data. In embodiments of the present application, the media stream data may be transmitted by a server.

The stream data refers to a sequential, massive, fast, and continuously arriving data sequence. The data sequence may be a sequence including a plurality of data packets. Generally, the stream data may be considered as a dynamic data set that increases infinitely as time lasts. The media stream data in this application is streaming media data, which may also be referred to as media data. The media stream data in this application may be a media data sequence including a plurality of media data packets, and include a plurality of types of data. For example, the media stream data may include at least one of video data, audio data, image data, application program installation data, and the like. The video data in this embodiment may further include at least one of an on-demand video, a live video, and the like. For example, the media stream data in this embodiment may be at least one of point-to-point streaming media data and video call data.

The buffer time refers to a buffer duration of the media stream data buffered in an application layer. The buffer time in this application may be represented with a buffer moment or may be represented with a buffer duration. For example, when the buffer time obtained by query by the terminal is a buffer moment, the terminal may determine the buffer duration by using a difference between different buffer moments.

Specifically, in scenarios such as audio/video on demand, a live streaming service, and real-time communication, for example, when a user starts an application program in a terminal for a video call or live video streaming, that is, in different use scenarios of the media stream data, when the terminal receives the media stream data transmitted by the server, the terminal may query for a buffer time of the media stream data in the application layer. For example, the user may play back an audio/video in the application program by using a trigger operation, and the terminal transmits a traffic request packet to the server in response to the trigger operation of the user, so that the server transmits requested media stream data to the terminal. That is, the server may transmit a traffic packet carrying the requested media stream data to the terminal.

For example, a description is provided based on an example in which the media stream data is audio/video data. When the user starts an application program A in a terminal A for audio/video on demand, the user may select an audio/video A in the application program A by using a selection operation. The terminal A transmits a traffic request packet to the server in response to the selection operation of the user, so that the server transmits media stream data corresponding to the requested audio/video A to the terminal A. That is, the server may transmit a traffic packet carrying the media stream data corresponding to the requested audio/video A to the terminal A.

Further, in a process in which the terminal A receives the media stream data corresponding to the audio/video A and transmitted by the server, the terminal A queries for a buffer time of media stream data corresponding to a to-be-played-back audio/video A in a local application layer. For example, the terminal A may query a status information table maintained by the terminal A for a buffer duration of media stream data corresponding to an application program playing back the audio/video A. The status information table is configured for storing buffer information info_l7_buffer of different application programs run in the terminal A.

In this application, the buffer information info_l7_buffer of different application programs includes, but is not limited to, a buffer time, and may further include other buffer information. For example, the buffer information may further include a quantity of complete audio/video frames l7_buffer_frame_amount in an application receiving queue corresponding to an application program, information of the last audio/video frame frame_last in an application buffer queue, and the like.

Operation 204: Encapsulate the buffer time in an acknowledgement packet to obtain a target acknowledgement packet.

The acknowledgement packet means that a data receiving end (the terminal) receives a traffic packet from a data transmitting end (the server) and periodically transmits a message acknowledgement packet to the server. The message acknowledgement packet is the acknowledgement packet.

The target acknowledgement packet is a message acknowledgement packet carrying the buffer time. That is, in this application, before the terminal transmits a message acknowledgement packet pkt_ack to the server, the terminal may first query a status information table maintained by the terminal for the buffer time of the media stream data, and encapsulate the buffer time obtained by query in the message acknowledgement packet pkt_ack, to obtain a target acknowledgement packet pkt_ack_l7_buffer carrying the buffer time.

Specifically, in a process in which the terminal receives the media stream data transmitted by the server, after the terminal obtains the buffer time of the media stream data by query, the terminal may encapsulate the buffer time obtained by query in an acknowledgement packet, to obtain a target acknowledgement packet carrying the buffer time.

For example, a description is provided based on an example in which the media stream data is audio/video data. In the process in which the terminal A receives the media stream data corresponding to the audio/video A and transmitted by the server, assuming that the terminal A obtains by query that buffer information of the media stream data corresponding to the to-be-played-back audio/video A in the local application layer is info_l7_buffer (l7_buffer_time_len), that is, the buffer information info_l7_buffer includes a buffer duration l7_buffer_time_len, the terminal A may encapsulate the buffer information info_l7_buffer (l7_buffer_time_len) obtained by query in the message acknowledgement packet pkt_ack, to obtain the target acknowledgement packet pkt_ack_l7_buffer carrying the buffer time l7_buffer_time_len.

In an embodiment, in a process of receiving the media stream data transmitted by the server, the terminal determines, according to received media data packets, whether packet loss occurs. If the packet loss occurs, the terminal determines an identifier (for example, a sequence number) of a lost media packet, and encapsulates the identifier of the lost media packet and the buffer time in an acknowledgement packet, so that the server determines the lost media packet according to the identifier of the lost media packet.

For example, if the server transmits media data packets with sequence numbers 1 to 10 and the terminal receives the media data packets with the sequence numbers 1 to 4 and the media data packets with the sequence numbers 6 to 10, the terminal may determine that the media data packet with the sequence number 5 is lost. In this case, the terminal may encapsulate both the sequence number of the lost media data packet and the buffer time in an acknowledgement packet, and then transmit a target acknowledgement packet obtained by encapsulation to the server, so that the server can determine the lost media data packet according to the sequence number.

Operation 206: Transmit the target acknowledgement packet to the server, so that the server adjusts, when determining that packet loss occurs in the media stream data, a retransmission parameter based on a recovery time of the packet loss and the buffer time in the target acknowledgement packet, and transmits, before recovering the media stream data, a lost media packet based on the retransmission parameter. In embodiments of the present application, the retransmission parameter may be a packet loss retransmission parameter. In embodiments of the present application, operation 206 may include following steps: transmit the target acknowledgement packet to the server, so that the server adapts to, when determining that packet loss occurs in the media stream data, a packet loss retransmission parameter based on a packet loss recovery time and the buffer time in the target acknowledgement packet, and transmits, before recovering the media stream data, a lost media packet based on the packet loss retransmission parameter.

The packet loss means that data of one or more data packets cannot reach a destination by using a network. For example, in this application, in the process in which the server transmits the media stream data to the terminal, a phenomenon that some data packets do not reach the terminal may occur.

The recovery time of the packet loss is a preset time threshold for packet loss recovery. For example, the recovery time of the packet loss in this application may be set to Time_threshold, and Time_threshold may be set to a fixed value Time_threshold_value. For example, Time_threshold_value = 200 ms. Alternatively, Time_threshold may be set to a multiple of delay information, for example, Time_threshold = N * SRTT; where SRTT represents a smooth round-trip time, N represents a preset quantity, and N is configured by an administrator. For example, N = 2.

The retransmission parameter is a parameter configured for reflecting a retransmission policy. For example, the retransmission parameter in this application may include retransmission parameters corresponding to different retransmission policies. For example, a retransmission parameter corresponding to an aggressive retransmission policy is a first retransmission parameter. A retransmission parameter corresponding to a redundancy backhaul policy is a second retransmission parameter.

Recovering the media stream data means recovering packet loss data during the transmission of the media stream data. In some cases, if a packet loss rate is higher during data transmission, terminal-side service experience is not necessarily poor. A key factor for terminal-side user experience is: whether network packet loss occurring is recovered in time within a period of time, a phenomenon such as frame freezing may not occur on the terminal side when playing back audio/video data if the network packet loss occurring is recovered in time.

The lost media packet refers to a media data packet lost during the transmission of the media stream data. For example, if the server transmits media data packets with sequence numbers 1 to 10 and the terminal receives the media data packets with the sequence numbers 1 to 4 and the media data packets with the sequence numbers 6 to 10, the media data packet with the sequence number 5 is the lost media packet.

Operation 208: Receive the lost media packet transmitted by the server based on the adjusted retransmission parameter.

Specifically, after the terminal encapsulates the buffer time obtained by query in the acknowledgement packet to obtain the target acknowledgement packet, the terminal may transmit the target acknowledgement packet carrying the buffer time to the server, so that when the server determines that packet loss occurs in the media stream data, the server may adjust the retransmission parameter based on the recovery time of the packet loss and the buffer time in the target acknowledgement packet, and transmit, before recovering the media stream data, the lost media packet based on the retransmission parameter. Further, the terminal may receive the lost media packet transmitted by the server based on the retransmission parameter.

For example, a description is provided based on an example in which the media stream data is audio/video data. In the process in which the terminal A receives the media stream data corresponding to the audio/video A and transmitted by the server, assuming that the terminal A encapsulates buffer information info_l7_buffer (l7_buffer_time_len) obtained by query in a message acknowledgement packet pkt_ack, to obtain a target acknowledgement packet pkt_ack_l7_buffer carrying a buffer time, the terminal A may transmit the target acknowledgement packet pkt_ack_l7_buffer to the server. After the server receives the target acknowledgement packet pkt_ack _l7_buffer transmitted by the terminal A, the server may determine whether packet loss occurs during the transmission of the media stream data. When the server determines that the packet loss occurs during the transmission of the media stream data, the server may adaptively adjust a retransmission policy for a lost packet according to a preset recovery time of the packet loss and the buffer time l7_buffer_time_len in the target acknowledgement packet pkt_ack_l7_buffer. A retransmission parameter corresponding to the retransmission policy may be obtained. Further, the server may retransmit the lost media packet based on the obtained retransmission parameter, so that the terminal receives the lost media packet before recovering the media stream data, and recovers the media stream data (that is, recovers lost data) according to the lost media packet, to ensure, as much as possible, that there is sufficient media stream data for use (e.g., audio/video playback) at next stage before the buffer time is consumed up.

In a conventional manner, audio/video data transmission is used as an example in a reliable transmission protocol. If a traffic packet is lost during transmission, a receiving end, that is, the terminal, needs to "notify", by using a message acknowledgement packet, a transmitting end, that is, the server, to retransmit the lost packet. In addition, the receiving end, that is, the terminal, is in a status of "always waiting" for the lost packet. After receiving the retransmitted lost packet, the receiving end, that is, the terminal, performs audio/video playback on a subsequent traffic packet.

In this embodiment, in a process of receiving media stream data, a buffer time of the media stream data is queried for; the buffer time is encapsulated in an acknowledgement packet to obtain a target acknowledgement packet; the target acknowledgement packet is transmitted to the server, so that the server adjusts, when determining that packet loss occurs in the media stream data, a retransmission parameter based on a recovery time of the packet loss and the buffer time in the target acknowledgement packet, and transmits, before recovering the media stream data, a lost media packet based on the retransmission parameter; and the lost media packet transmitted by the server based on the retransmission parameter is received. Since the target acknowledgement packet is obtained by encapsulating the buffer time in the acknowledgement packet, when the server determines that packet loss occurs in the media stream data, the server may adjust the retransmission parameter according to the recovery time of the packet loss and the buffer time in the target acknowledgement packet. That is, after receiving the buffer time, the server can adaptively adjust the retransmission parameter corresponding to the retransmission policy for the lost packet. Compared with an indiscriminate packet loss retransmission policy in the conventional manner, the packet loss recovery method in this embodiment can well balance a relationship between traffic transmission and packet loss recovery, optimize user-side frame freezing caused by packet loss, reduce an influence on subsequent traffic transmission efficiency, and quickly and effectively recover the network packet loss without affecting the service experience on the user terminal side, thereby helping improve user-side QoE of audio/video-based Internet services.

In an embodiment, the media stream data is buffered in an application receiving queue corresponding to an application program; before the querying for a buffer time of the media stream data, the method further includes:

determining buffer information based on the media stream data in the application receiving queue; and storing the buffer information into a status information table corresponding to the application program; and the querying for a buffer time of the media stream data includes: querying the status information table for the buffer time of the media stream data.

The application program refers to a target application program using the transmitted media stream data. For example, after the terminal receives the media stream data transmitted by the server, the terminal plays back the received media stream data by using an application program A, and the application program A is the target application program.

The application receiving queue is an application receiving queue corresponding to an application program, and may also be referred to as an application buffer queue in some cases. In this application, each application program corresponds to one application receiving queue. For example, an application receiving queue corresponding to the application program A is Q1.

The buffer information is buffer information of an application receiving queue corresponding to an application program. For example, the buffer information in this application may include:

a) a buffer duration l7_buffer_time_len of data in the application buffer queue;

b) a quantity of complete audio/video frames l7_buffer_frame_amount in the application buffer queue; and

c) information of the last audio/video frame frame_last in the application buffer queue, which specifically includes:

an identifier of the audio/video frame frame_last_id; and

a reception degree parameter of the audio/video frame frame_last_rcv, specifically including a total quantity of packets of the audio/video frame frame_last_pkt_amount and a quantity of packets that have been received currently frame_last_pkt_rcv_amount. Therefore, the information of the last audio/video frame frame_last in the application buffer queue may be represented with the following formula (1):

$$\text{frame\_last} = \{\text{frame\_last\_id, frame\_last\_rcv}\} \quad (1)$$

The buffer information info_l7_buffer may be represented with the following formula (2):

$$\text{info\_l7\_buffer} = \{\text{l7\_buffer\_time\_len, l7\_buffer\_frame\_amount, frame\_last}\} \ (2)$$

The status information table is a table configured for storing buffer information of different application programs run in the terminal. The status information table in this application may include: application identifiers of application programs, buffer information corresponding to the application programs, and update times. The update times refer to update times of the buffer information corresponding to the application programs. For example, FIG. 3 is a schematic diagram of an application status information table of a user terminal. As can be seen from FIG. 3, buffer information of an application program corresponding to an application identifier 1 and run at a current moment in the terminal is info_l7_buffer_1, and an update time corresponding to the buffer information info_17_buffer_1 is Time_1.

Specifically, when the terminal receives the media stream data transmitted by the server, the terminal may buffer the received media stream data in the application receiving queue corresponding to the application program. Before the terminal queries for a buffer time of the transmitted media stream data, the terminal may periodically acquire, by using a monitoring module, buffer information info_l7_buffer of each application receiving queue, and feed back the acquired buffer information info_l7_buffer to a transmission layer. Meanwhile, the terminal may maintain, by using the monitoring module, the status table shown in FIG. 3, and periodically update buffer information info_l7_buffer of different application programs in the table. The terminal may monitor, by using the monitoring module, the media stream data in the application receiving queue corresponding to each application program. That is, the monitoring module in the terminal may determine, based on the media stream data in the application receiving queue corresponding to each application program, the buffer information info_l7_buffer of each application program, and periodically update the buffer information info_l7_buffer of each application program in the status information table maintained by the monitoring module and shown in FIG. 3.

Further, in the process in which the terminal receives the media stream data transmitted by the server, the terminal may periodically query, according to a preset policy or a preset protocol, the status information table shown in FIG.

3 for a buffer time of an application program playing back the media stream data. For example, a time interval T_gain_l7 at which the terminal periodically acquires buffer information info_l7_buffer of each application program may be configured by the administrator in advance and embodied in a configuration file. By default, the time interval may be set to T_gain_l7 = 5 ms.

For example, a description is provided based on an example in which the media stream data is audio/video data. FIG. 4 is a schematic diagram of a user terminal periodically acquiring buffer information of an application receiving queue. The monitoring module in FIG. 4 is located between the application layer and the transmission layer, with a main objective of acquiring buffer information info_l7_buffer of different application programs in time. That is, in the method provided in this application, to acquire the buffer information info_l7_buffer in the application receiving queue corresponding to each application program, the monitoring module may be added to the application layer, or the monitoring module may be added between the application layer and the transmission layer. In the process in which the terminal A receives the media stream data corresponding to the audio/video A and transmitted by the server, assuming that the terminal A buffers the received media stream data corresponding to the audio/video A in the application receiving queue Q1 corresponding to an application program 1, the terminal A may determine, based on the media stream data corresponding to the to-be-played-back audio/video A in the application receiving queue Q1, that the buffer information is info_l7_buffer_1. The buffer information info_l7_buffer_1 includes a buffer duration l7_buffer_time_len1.

Further, the terminal A may store the buffer information info_l7_buffer_1 in the status information table shown in FIG. 3. That is, the terminal A may update the buffer information info_l7_buffer_1 in an entry of the application identifier 1 corresponding to the application program 1 shown in FIG. 3, so that when the terminal A needs to transmit a target acknowledgement packet to the server, the terminal A may obtain by query, from the status information table shown in FIG. 3, that a buffer time of the media stream data corresponding to the audio/video A is l7_buffer_time_len1, and encapsulate the buffer time l7_buffer_time_len1 obtained by query in the acknowledgement packet pkt_ack, to obtain the target acknowledgement packet pkt_ack_l7_buffer. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and adjusts aggressiveness of packet loss recovery according to the information, which effectively reduces a waiting time of the user terminal side for packet loss data, thereby optimizing service experience on the user terminal side.

In an embodiment, the method further includes: deleting an application status bar of the application program from the status information table when the application program is switched to a closed state; and adding, when another application program is switched to an open state, an application status bar corresponding to an application identifier of the another application program to the status information table.

The closed state refers to a state in which the application program stops running. For example, if a user closes the application program A by using a trigger operation, the terminal switches the application program A from the open state to the closed state in response to the trigger operation of the user.

The application status bar is an application status entry in the status information table. For example, each row in the status information table may be used as an application status bar of the application program. As shown in FIG. 3, information included in the application status bar of the application program includes an application identifier of the application program, buffer information, that is, info_l7_buffer, and an update time.

The another application program refers to an application program other than an application program that currently uses transmitted media stream data. That is, the another application program and the application program in this application are configured for distinguishing different application programs. For example, if the application program A in the terminal is an application program that plays back the media stream data, the another application program may be another application program other than the application program A in the terminal. For example, the another application program may be an application program B and an application program C in the terminal.

The open state refers to a state in which the application program is open and running. For example, if the user opens the application program A by using a trigger operation, the terminal switches the application program A from the closed state to the open state in response to the trigger operation of the user.

The application identifier is an identifier configured for uniquely identifying the application program. For example, the another application program may be an application program B and an application program C in the terminal, an application identifier of the another application program B is B, and an application identifier of the another application program C is C.

Specifically, the terminal may maintain the status table shown in FIG. 3 by using the monitoring module and periodically update the buffer information info_l7_buffer of different application programs in the table. That is, the terminal may monitor the media stream data in the application receiving queue corresponding to each application program by using the monitoring module, and determine the buffer information info_l7_buffer of each application program based on the media stream data in the application receiving queue corresponding to each application program. After the terminal periodically updates the buffer information info_l7_buffer of each application program in the status information table shown in FIG. 3 maintained by the terminal, when the terminal detects that a target application program is switched to a closed state, the terminal may delete an application status bar of the target application from the status information table shown in FIG. 3. Alternatively, when the terminal detects that another application program is switched to an open state, the terminal may add an application status bar corresponding to an application identifier of the another application program to the status information table shown in FIG. 3.

For example, assuming that the application program 1 in the terminal is an application program that plays back transmitted media stream data 1, the another application program may be another application program other than the application program 1 in the terminal. For example, the another application program may be an application program 2 and an application program 3 in the terminal. After the terminal periodically updates the buffer information info_l7_buffer of each application program in the status information table shown in FIG. 3 and maintained by the terminal, when the terminal detects that the application program 1 is switched to a closed state, the terminal may delete an application status bar of the application program 1 from the status information table shown in FIG. 3. That is, the terminal may delete, from the status information table shown in FIG. 3, an application status bar of a row corresponding to the application identifier 1 of the application program 1. When the terminal detects that another application program 3 is switched to an open state, the terminal may add an application status bar corresponding to an application identifier 3 of the another application program 3 to the status information table shown in FIG. 3. For example, the terminal may add an application status bar of a row corresponding to the application identifier 3 of the application program 3 to the status information table shown in FIG. 3. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and adjusts aggressiveness of packet loss recovery according to the information, which effectively reduces a waiting time of the user terminal side for packet loss data, thereby optimizing service experience on the user terminal side.

In an embodiment, the operation of encapsulating the buffer time in an acknowledgement packet to obtain a target acknowledgement packet includes: encapsulating, when it is detected that the buffer time in the status information table is updated, an updated buffer time in the acknowledgement packet to obtain the target acknowledgement packet.

The updated buffer time is a buffer time after the update. For example, at a moment T1, the buffer time of the application program 1 in the status information table is S1, at a moment T2, the buffer time of the application program 1 in the status information table is updated, and the buffer time after the update is S2.

Specifically, in the process in which the terminal receives the media stream data transmitted by the server, when the terminal detects that the buffer time of the media stream data in the status information table is updated, the terminal may acquire an updated buffer time and encapsulate the updated buffer time in the acknowledgement packet, to obtain the target acknowledgement packet. Further, after obtaining the target acknowledgement packet, the terminal may immediately trigger a process in which the terminal transmits the target acknowledgement packet to the server. That is, in this application, the buffer time in the latest buffer information may trigger automatic generation of the target acknowledgement packet.

For example, in a process in which the terminal receives media stream data A transmitted by the server, when the terminal detects that the buffer time of the application program 1 (the application identifier 1) playing back the media stream data A in the status information table shown in FIG. 3 is updated, that is, when the terminal detects that the buffer time in latest buffer information info_l7_buffer_1 of the application program 1 playing back the media stream data A in the status information table shown in FIG. 3 is updated from S1 to S2, the terminal may acquire the updated buffer time S2, and encapsulate the updated buffer time S2 in the acknowledgement packet pkt_ack, to obtain the target acknowledgement packet pkt_ack_l7_buffer. Further, after the terminal obtains the target acknowledgement packet pkt_ack_l7_buffer, a process in which the terminal transmits the target acknowledgement packet pkt_ack_l7_buffer to the server may be immediately triggered, so that the server can receive the target acknowledgement packet in time, accurately learn, based on the buffer time carried in the target acknowledgement packet, whether frame freezing occurs (is to occur) on the terminal side, and adjust aggressiveness of packet loss recovery according to the information, thereby optimizing service experience. At the same time, the problem of delayed data transmission due to excessively slow reply with pkt_ack, so that the network packet loss can be quickly and effectively recovered without affecting the service experience on the user terminal side, which reduces an influence on subsequent data transmission efficiency and helps improve user-side QoE of audio/video-based Internet services.

In an embodiment, before the querying for a buffer time of the media stream data, the method further includes: generating the acknowledgement packet when the media stream data is received; and the querying for a buffer time of the media stream data includes: querying for the buffer time of the media stream data when the acknowledgement packet is detected.

Specifically, in the process in which the terminal receives the media stream data transmitted by the server, when the terminal receives the media stream data, the terminal may generate the acknowledgement packet. When the terminal detects the generated acknowledgement packet, the terminal may query the status information table maintained by the terminal for a latest buffer time of the transmitted media stream data, and encapsulate the latest buffer time obtained by query in the acknowledgement packet, to obtain the target acknowledgement packet. Further, after obtaining the target acknowledgement packet, the terminal may immediately trigger the process in which the terminal transmits the target acknowledgement packet to the server. That is, in this application, the latest generated acknowledgement packet may trigger automatic acquisition of the latest buffer time and automatic generation of the target acknowledgement packet.

For example, in a process in which the terminal receives media stream data A transmitted by the server, when the terminal receives the media stream data A, the terminal may generate a packet pkt_ack. When the terminal detects the generated packet pkt_ack, the terminal may query the status information table maintained by the terminal and shown in FIG. 3 for latest buffer information info_l7_buffer corresponding to an application program playing back the media stream data A, where the latest buffer information info_l7_buffer includes a latest buffer time S2, and encapsulate the latest buffer time S2 obtained by query in the packet pkt_ack, to obtain a target acknowledgement packet pkt_ack_l7_buffer. Further, after the terminal obtains the target acknowledgement packet pkt_ack_l7_buffer, a process in which the terminal transmits the target acknowledgement packet pkt_ack_l7_buffer to the server may be immediately triggered, so that the server can receive the target acknowledgement packet in time, accurately learn, based on the buffer time carried in the target acknowledgement packet, whether frame freezing occurs (is to occur) on the terminal side, and adjust aggressiveness of packet loss recovery according to the information, thereby optimizing service experience. At the same time, the problem of delayed data transmission due to excessively slow reply with pkt_ack, so that the network packet loss can be quickly and effectively recovered without affecting the service experience on the user terminal side, which reduces an influence on subsequent data transmission efficiency and helps improve user-side QoE of audio/video-based Internet services.

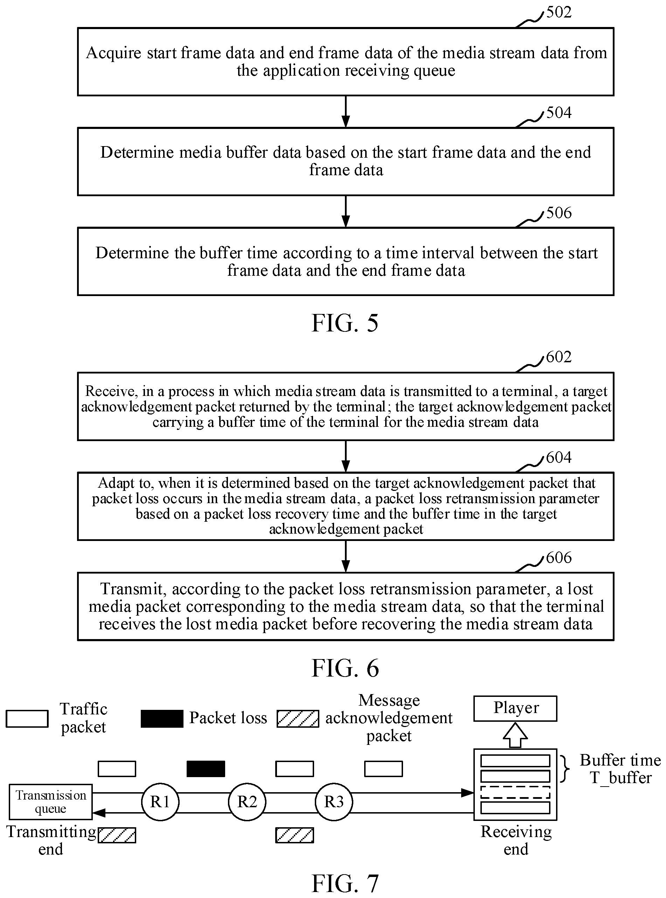

In an embodiment, as shown in FIG. 5, the operation of determining buffer information based on media stream data in an application receiving queue includes:

operation 502: acquiring start frame data and end frame data of the media stream data from the application receiving queue;

operation 504: determining media buffer data based on the start frame data and the end frame data; and

operation 506: determining the buffer time according to a time interval between the start frame data and the end frame data.

The start frame data is the first piece of available data in the application receiving queue. For example, the start frame data in this application may be the first piece of available frame data in the application receiving queue.

The end frame data is the last piece of available data in the application receiving queue. For example, the end frame data in this application may be the last piece of available frame data in the application receiving queue.

The media buffer data refers to data configured for reflecting related information of the media stream data in the application receiving queue. For example, the media buffer data in this application at least includes: a) a buffer duration l7_buffer_time_len of data in the application receiving queue; b) a quantity of complete audio/video frames l7_buffer_frame_amount in the application receiving queue; and c) information of the last audio/video frame frame_last in the application receiving queue.

Specifically, in the process in which the terminal receives the media stream data transmitted by the server, the terminal may buffer the received media stream data in an application receiving queue corresponding to an application program. The terminal may periodically acquire, by using a monitoring module, buffer information info_l7_buffer of each application receiving queue. That is, the terminal may acquire, by using the monitoring module, start frame data and end frame data of the media stream data from the application receiving queue corresponding to each application program, and determine media buffer data according to the start frame data and the end frame data. For example, the terminal may determine a quantity of complete audio/video frames l7_buffer_frame_amount in the application receiving queue according to frame numbers of the start frame data and the end frame data. Further, the terminal may determine the buffer time according to the time interval between the start frame data and the end frame data. For example, the terminal determines, according to a timestamp of the start frame data and a timestamp of the end frame data, that the time interval between the start frame data and the end frame data is S, and the terminal may use the time interval S as the buffer time. In some cases, the terminal may alternatively use the timestamp of the start frame data and the timestamp of the end frame data as the buffer time.

For example, assuming that the terminal acquires, from an application receiving queue Q corresponding to an application program 1 by using the monitoring module, start frame data f3 and end frame data f6 of the media stream data, the terminal may determine a quantity of complete audio/video frames l7_buffer_frame_amount=4 in the application receiving queue according to frame numbers f3 and f6 of the start frame data and the end frame data. At the same time, the terminal may also determine the information of the last audio/video frame frame_last in the application receiving queue according to the end frame data f6, which specifically includes:

an identifier of the audio/video frame frame_last_id=f6 and a reception degree parameter of the audio/video frame frame_last_rcv. frame_last_rcv specifically includes a total quantity of packets of the audio/video frame frame_last_pkt_amount and a quantity of packets that have been received currently frame_last_pkt_rcv_amount.

Therefore, the information of the last audio/video frame frame_last in the application receiving queue may be represented with the foregoing formula (1). The reception degree parameter of the audio/video frame frame_last_rcv may be calculated based on two parameters: the quantity of packets that have been received currently frame_last_pkt_rcv_amount and the total quantity of packets of the audio/video frame frame_last_pkt_amount. For example, a calculation manner may be shown in the following formula (3):

$$\text{frame\_last\_rcv}=\text{frame\_last\_pkt\_rcv\_amount} \div \text{frame\_last\_pkt\_amount} \ (3)$$

(3)

Further, the terminal may determine that a time interval between the start frame data f3 and the end frame data f6 is S = 20s according to a timestamp of the start frame data f3 and a timestamp of the end frame data f6. The terminal may use the time interval S=20 s as a buffer time, and feed back the quantity of audio/video frames l7_buffer_frame_amount=4 in the application receiving queue, information of the last audio/video frame_last={frame_last_id = f6, frame_last_rcv}, and the buffer time S=20 s that are acquired to the transmission layer as buffer information info_l7_buffer. In addition, the terminal may maintain the status table shown in FIG. 3 by using the monitoring module, and periodically update buffer information info_l7_buffer of different application programs in the table. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and adjusts aggressiveness of packet loss recovery according to the information, which effectively reduces a waiting time of the user terminal side for packet loss data, thereby optimizing service experience on the user terminal side.

In an embodiment, the determining the buffer time according to a time interval between the start frame data and the end frame data includes: acquiring a first timestamp of the start frame data and a second timestamp of the end frame data; the first timestamp being a playback time point of the start frame data in a player of the application program, and the second timestamp being a playback time point of the end frame data in the player; and determining the buffer time based on a difference between the second timestamp and the first timestamp.

The first timestamp and the second timestamp in this application are merely intended to distinguish timestamps corresponding to different frame data.

Specifically, in the process in which the terminal receives the media stream data transmitted by the server, the terminal may buffer the received media stream data in an application receiving queue corresponding to an application program. The terminal may periodically acquire, by using a monitoring module, buffer information info_l7_buffer of each application receiving queue. That is, the terminal may acquire, from the application receiving queue corresponding to each application program by using the monitoring module, start frame data and end frame data of the media stream data, and acquire the first timestamp of the start frame data and the second timestamp of the end frame data. Further, the terminal may calculate a difference between the second timestamp and the first timestamp and use an absolute value of the difference as the buffer time. In some cases, the terminal may alternatively use the first timestamp of the start frame data and the second timestamp of the end frame data as the buffer time.

For example, assuming that the terminal acquires, from an application receiving queue Q corresponding to an application program 1 by using the monitoring module, start frame data f3 and end frame data f6 of media stream data A, the terminal may determine, according to a first timestamp t1 of the start frame data f3 and a second timestamp t2 of the end frame data f6, that a difference between the second timestamp t2 and the first timestamp t1 is d=20 s, and the terminal may use an absolute value d=|20| s of the difference d=20 s as a buffer time. In addition, the terminal may maintain the status table shown in FIG. 3 by using the monitoring module, and periodically update buffer time in buffer information info_l7_buffer of different application programs in the table. For example, the terminal may update the latest buffer time d=|20| s in buffer information info_l7_buffer_1 corresponding to the application program 1 (the application identifier 1) in the status table shown in FIG. 3. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and adjusts aggressiveness of packet loss recovery according to the information, which effectively reduces a waiting time of the user terminal side for packet loss data, thereby optimizing service experience.

In an embodiment, the method further includes: acquiring first start frame data and first end frame data of the media stream data from the application receiving queue of the application layer; acquiring second start frame data and second end frame data of the media stream data from a data receiving queue of the transmission layer; and determining the buffer time based on a first time interval between the first start frame data and the first end frame data and a second time interval between the second start frame data and the second end frame data.

The first start frame data and the second start frame data are configured for distinguishing start frame data in different queues, and the first end frame data and the second end frame data are configured for distinguishing end frame data in different queues.

Specifically, in the process in which the terminal receives the media stream data transmitted by the server, the terminal may buffer the received media stream data in a queue. The queue in this embodiment of this application includes a buffer queue of an application-layer player (which may also be referred to as an application receiving queue) and a data receiving queue of a transmission layer, and the terminal may acquire the first start frame data and the first end frame data of the media stream data from the application receiving queue of the application layer. At the same time, if data in the data receiving queue of the transmission layer is not empty, the terminal may acquire the second start frame data and the second end frame data of the media stream data from the data receiving queue of the transmission layer. Further, the terminal may determine the buffer time based on the first time interval between the first start frame data and the first end frame data and the second time interval between the second start frame data and the second end frame data. That is, the terminal may calculate the first time interval between the first start frame data and the first end frame data and the second time interval between the second start frame data and the second end frame data, determine a sum of the first time interval and the second time interval, and use the determined sum as a finally obtained buffer time. Alternatively, in some cases, the terminal may separately take absolute values of the first time interval and the second time interval, determine a sum of the absolute values of the first time interval and the second time interval, and use the determined sum as the finally obtained buffer time.

A calculation manner in which the terminal calculates the first time interval between the first start frame data and the first end frame data and the second time interval between the second start frame data and the second end frame data includes: calculating, by the terminal, a difference between the timestamp of the first start frame data and the timestamp of the first end frame data, and taking an absolute value of the difference as the first time interval; and similarly, calculating, by the terminal, a difference between the timestamp of the second start frame data and the timestamp of the second end frame data, and taking an absolute value of the difference as the second time interval.

In this embodiment, when replying with the message acknowledgement packet, the user terminal carries information of a data buffer time of a current application layer (e.g., a player), so that a data transmitting end (a cloud server), after receiving the buffer time, can adaptively adjust a retransmission policy for a previously lost packet, which can well balance a relationship between traffic transmission and packet loss recovery, optimize user-side frame freezing caused by packet loss, reduce an influence on subsequent traffic transmission efficiency, and quickly and effectively recover the network packet loss without affecting the service experience on the user terminal side, thereby helping improve user-side QoE of audio/video-based Internet services.

In an embodiment, the transmitting, before recovering the media stream data, a lost media packet based on the retransmission parameter includes: transmitting, before recovering the media stream data, the lost media packet to a routing node based on the retransmission parameter, and instructing, when the retransmission parameter satisfies a priority condition, the routing node to forward the lost media packet according to the priority condition.

The routing node refers to an intermediate routing node in the process in which the terminal receives the media stream data transmitted by the server. For example, in this application, the routing node may be a gateway, an intermediate node router, or the like. The routing node is configured to forward the received media stream data.

The priority condition is a condition configured for screening a retransmission parameter. For example, the priority condition in this application may be set as follows: whether the retransmission parameter satisfies a preset target value is determined. For example, the preset target value may be 1. That is, when the retransmission parameter satisfies the preset target value and is 1, the retransmission parameter satisfies the priority condition.

Specifically, the terminal transmits the target acknowledgement packet to the server, so that when the server determines that packet loss occurs in the media stream data, the server may adjust the retransmission parameter based on the recovery time of the packet loss and the buffer time in the target acknowledgement packet, and before recovering the media stream data, the server transmits the lost media packet based on the adaptive retransmission parameter. That is, before recovering the media stream data, the server may transmit the lost media packet to the routing node based on the adaptive retransmission parameter. When the routing node detects that the retransmission parameter satisfies the priority condition, the routing node is instructed to forward the lost media packet according to the priority condition. That is, when the routing node detects that the retransmission parameter satisfies the priority condition, the routing node may adjust a processing priority of a packet including the lost media packet. For example, the routing node may set the processing priority of the packet including the lost media packet to a high priority, so that the routing node forwards the packet through a forwarding queue with a high priority. In this way, transmission efficiency of a retransmitted packet can be enhanced, a time during which a user-side terminal waits for the data packet loss can be reduced, and indexes such as audio/video freezing can be optimized.

In an embodiment, the operation of transmitting the target acknowledgement packet to the server includes: backhauling a preset quantity of target acknowledgement packets to the server when the buffer time is less than the recovery time of the packet loss; the recovery time of the packet loss being determined based on delay information of the media stream data during the transmission.

The recovery time of the packet loss may be a preset time threshold. For example, the recovery time of the packet loss may be set to a fixed value Time_threshold_value, or may be set to a multiple of the delay information. For example, the recovery time of the packet loss Time_threshold = N * SRTT, where SRTT denotes a smooth round-trip time, and N is configured by the administrator. For example, N = 2. The delay information in this application may include an SRTT and an RTT. The RTT denotes a round-trip time.

Specifically, after the terminal encapsulates the buffer time obtained by query in the acknowledgement packet to obtain the target acknowledgement packet, when the terminal determines that the buffer time is less than a recovery time of the packet loss, the terminal may use an aggressive backhaul policy when backhauling the target acknowledgement packet to the server. For example, the terminal may backhaul a preset quantity of target acknowledgement packets to the server. That is, when the buffer time is less than the recovery time of the packet loss, the application program playing back the media stream data may quickly play out remaining buffered data. Particularly, if the terminal does not "notify" the transmitting end (the server) in time when the player of the application program plays out all the data in the buffer, problems such as frame freezing may occur. During actual transmission, there may be a delay in the target acknowledgement packet fed back by the terminal. For example, the terminal replies with one target acknowledgement packet only after receiving 5 packets, or a backhauled target acknowledgement packet may be lost. Therefore, in this embodiment of this application, when the terminal determines that the buffer time is less than the recovery time of the packet loss, the terminal may backhaul M target acknowledgement packets to the server, to prevent loss of the target acknowledgement packet during backhaul.

For example, after the terminal encapsulates the buffer time l7_buffer_time_len obtained by query in the acknowledgement packet to obtain a target acknowledgement packet pkt_ack_l7_buffer, when the terminal determines that the buffer time l7_buffer_time_len is less than the recovery time of the packet loss Time_threshold, the terminal uses an "aggressive" redundant backhaul policy when backhauling pkt_ack_l7_buffer. That is, the terminal backhauls M identical pkt_ack_l7_buffer, to prevent loss of pkt_ack_l7_buffer during backhaul. Time_threshold may be set to a fixed value Time_threshold_value or may be set to a multiple of delay information. For example, Time_threshold=N * SRTT. Time_threshold_value, N, and M are configured by the administrator, and take effect in the configuration file. By default, Time_threshold_value=200 ms, N=2, and M=3. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and adjusts aggressiveness of packet loss recovery according to the information, which effectively reduces a waiting time of the user terminal side for packet loss data, thereby optimizing service experience.

In an embodiment, as shown in FIG. 6, another data transmission method is provided. The method may be performed by a server or a terminal alone or by the server and the terminal together. A description is provided based on an example in which the method is applied to the server in FIG. 1, including the following operations:

Operation 602: Receive, in a process of transmitting media stream data to a terminal, a target acknowledgement packet returned by the terminal; the target acknowledgement packet carrying a buffer time of the terminal for the media stream data.

Operation 604: Adjust, when it is determined based on the target acknowledgement packet that packet loss occurs in the media stream data, a retransmission parameter based on a recovery time of the packet loss and the buffer time in the target acknowledgement packet.

Operation 606: Transmit, according to the adjusted retransmission parameter, a lost media packet corresponding to the media stream data, so that the terminal receives the lost media packet before recovering the media stream data.

Specifically, in the process in which the server transmits the media stream data to the terminal, the server periodically receives the target acknowledgement packet returned by the terminal. The target acknowledgement packet carries the buffer time of the terminal for the media stream data. When the server determines based on the target acknowledgement packet that packet loss occurs in the media stream data, the server may adjust the retransmission parameter based on the recovery time of the packet loss and the buffer time in the target acknowledgement packet, and transmit, according to the retransmission parameter, the lost media packet corresponding to the media stream data, so that the terminal receives the lost media packet before recovering the media stream data.

For example, a description is provided based on an example in which the media stream data is audio/video data.

In the process in which the terminal A receives the media stream data corresponding to the audio/video A and transmitted by the server, assuming that the terminal A encapsulates buffer information info_l7_buffer (l7_buffer_time_len) obtained by query in a message acknowledgement packet pkt_ack to obtain a target acknowledgement packet pkt_ack _l7_buffer carrying a buffer time, the terminal A may transmit the target acknowledgement packet pkt_ack_l7_buffer to the server. After the server receives the target acknowledgement packet pkt_ack _l7_buffer transmitted by the terminal A, the server may determine, based on the target acknowledgement packet, whether packet loss occurs in the media stream data. When the server determines that the packet loss occurs during the transmission of the media stream data, the server may adaptively adjust a retransmission policy for a lost packet according to a preset recovery time of the packet loss and a buffer time l7_buffer_time_len in the target acknowledgement packet pkt_ack_l7_buffer. A retransmission parameter corresponding to the retransmission policy may be obtained. Further, the server may transmit the lost media packet corresponding to the media stream data based on the obtained retransmission parameter, so that the terminal receives the lost media packet before recovering the media stream data, and recovers the lost data based on the lost media packet, to ensure, as much as possible, that there is sufficient media data for use (e.g., audio/video playback) at next stage before the buffer time is consumed up. Whether packet loss occurs in the media stream data may be determined in a determination manner in the embodiment in FIG. 2a.

In the conventional manner, audio/video data transmission is used as an example in a reliable transmission protocol. If a traffic packet is lost during transmission, the receiving end, that is, the terminal, needs to "notify", by using a message acknowledgement packet, the transmitting end, that is, the server, to retransmit the lost packet. In addition, the receiving end, that is, the terminal, is in a status of "always waiting" for the lost packet. The receiving end, that is, the terminal, can perform audio/video playback on a subsequent traffic packet only after receiving the retransmitted lost packet.

In this embodiment, in a process of transmitting media stream data to the terminal, the target acknowledgement packet returned by the terminal is received; the target acknowledgement packet carries the buffer time of the terminal for the media stream data; when it is determined based on the target acknowledgement packet that packet loss occurs in the media stream data, the retransmission parameter is adapted to base on the recovery time of the packet loss and the buffer time in the target acknowledgement packet; and the lost media packet corresponding to the media stream data is transmitted according to the retransmission parameter, so that the terminal receives the lost media packet before recovering the media stream data. Since the target acknowledgement packet carries the buffer time of the terminal for the media stream data, when the server determines that packet loss occurs in the media stream data, the server may adjust the retransmission parameter according to the recovery time of the packet loss and the buffer time in the target acknowledgement packet. That is, after receiving the buffer time, the server can adaptively adjust the retransmission parameter corresponding to the retransmission policy for the lost packet. Compared with the indiscriminate packet loss retransmission policy in the conventional manner, the packet loss recovery method in this embodiment can well balance a relationship between traffic transmission and packet loss recovery, optimize user-side frame freezing caused by packet loss, reduce an influence on subsequent traffic transmission efficiency, and quickly and effectively recover the network packet loss without affecting the service experience on the user terminal side, thereby helping improve user-side QoE of audio/video-based Internet services.

In an embodiment, the operation of adjusting a retransmission parameter based on a recovery time of the packet loss and the buffer time in the target acknowledgement packet includes: comparing the recovery time of the packet loss with the buffer time in the target acknowledgement packet, to obtain a comparison result; adjusting a first retransmission parameter when the comparison result indicates that the buffer time is less than the recovery time of the packet loss; and adjusting a second retransmission parameter when the comparison result indicates that the buffer time is greater than or equal to the recovery time of the packet loss.

The comparison result is a magnitude relationship between the recovery time of the packet loss and the buffer time in the target acknowledgement packet. For example, the comparison result in this application may include three cases: In the first case, the buffer time is less than the recovery time of the packet loss. In the second case, the buffer time is equal to the recovery time of the packet loss. In the third case, the buffer time is greater than the recovery time of the packet loss.

The first retransmission parameter and the second retransmission parameter are configured for distinguishing retransmission parameters corresponding to different backhaul policies. For example, a retransmission parameter when an "aggressive" redundant backhaul policy is used is the first retransmission parameter, and a retransmission parameter when a default backhaul policy is used is the second retransmission parameter.

Specifically, when the server determines based on the target acknowledgement packet that packet loss occurs in the media stream data, the server may adjust the retransmission parameter based on the recovery time of the packet loss and the buffer time in the target acknowledgement packet. That is, the server compares the recovery time of the packet loss with the buffer time in the target acknowledgement packet, to obtain the comparison result. The server adjusts the first retransmission parameter when the comparison result indicates that the buffer time is less than the recovery time of the packet loss. The server adjusts the second retransmission parameter when the comparison result indicates that the buffer time is greater than or equal to the recovery time of the packet loss. In this embodiment, if the buffer time T_buffer ≥ the recovery time of the packet loss T_recovery, packet loss may be recovered within the buffer time, in which case frame freezing may not occur in the player on the terminal side. If the buffer time T_buffer < the recovery time of the packet loss T_recovery, packet loss has not been recovered when the data in the queue is consumed up, in which case frame freezing may occur in the player on the terminal side. In conclusion, different packet loss may have different influences on the QoE on the terminal side. Therefore, the server needs to adjust a packet loss recovery mechanism for the different influences.

For example, if T_buffer is much greater than T_recovery, for example, T_buffer ≥ 3 times T_recovery, the packet loss does not require urgent recovery. In this case, the transmitting end, that is, the server, may use a relatively moderate packet loss retransmission policy. That is, the server adjusts the second retransmission parameter corresponding to the relatively moderate packet loss retransmission policy. If T_buffer is slightly greater than or equal to T_recovery, the packet loss needs to be urgently recovered within T_buffer. In this case, the transmitting end, that is, the server, may use a relatively aggressive packet loss retransmission policy. That is, the server adjusts the second retransmission parameter corresponding to the relatively aggressive packet loss retransmission policy. If T_buffer is less than T_recovery, the packet loss faces a severe recovery problem. In this case, the transmitting end, that is, the server, may use a more aggressive packet loss retransmission policy. That is, the server adjusts the first retransmission parameter corresponding to the more aggressive packet loss retransmission policy.

In this embodiment, compared with the conventional manner in which a single transmitting end is used to detect a network state and control a transmission policy, an end-cloud collaboration method is used in this embodiment, which can accurately master user-side service experience, help improve competitiveness of a cloud server provider in optimizing QoE indexes such as audio/video freezing, screen blurring, and mosaics.

In an embodiment, the method further includes: retransmitting a preset quantity of lost media packets according to a preset transmission time interval when the comparison result indicates that the buffer time is less than the recovery time of the packet loss; where the transmission time interval is determined based on delay information of the media stream data during the transmission and the preset quantity; and retransmitting the lost media packets once when the comparison result indicates that the buffer time is greater than or equal to the recovery time of the packet loss.

The delay information may include an SRTT and an RTT. The RTT denotes a round-trip time, and the SRTT denotes a smooth round-trip time. That is, the transmission time interval in this embodiment of this application may be a preset time interval. For example, the transmission time interval may be set to a fixed value of 30 s. That is, the transmission time interval time_interval in this application may be configured by the administrator and embodied in a configuration manual; or configured according to current delay information, and calculated by using time_interval = 1/P * SRTT, where SRTT denotes a smooth round-trip time, P denotes a preset quantity, and P is configured by the administrator. For example, P=4. In this embodiment of this application, the value of P is 4 by default, and the value may be configured by the administrator and declared in the configuration file.

Specifically, when the server determines based on the target acknowledgement packet that packet loss occurs in the media stream data, the server may adjust the retransmission parameter based on the recovery time of the packet loss and the buffer time in the target acknowledgement packet. That is, the server compares the recovery time of the packet loss with the buffer time in the target acknowledgement packet, to obtain a comparison result. When the comparison result indicates that the buffer time is less than the recovery time of the packet loss, the server may retransmit a preset quantity of lost media packets according to the preset transmission time interval. For example, when the comparison result indicates that the buffer time l7_buffer_time_len in the buffer information info_l7_buffer < the recovery time of the packet loss Time_threshold, the transmitting end, that is, the server, retransmits 4 identical packets pkt_loss to the terminal. When the comparison result indicates that the buffer time l7_buffer_time_len in the buffer information info_l7_buffer ≥ the recovery time of the packet loss Time_threshold, the transmitting end, that is, the server, retransmits a packet pkt_loss to the terminal.

In this embodiment, when the buffer time is longer, a task of packet loss recovery is not urgent. In this case, the transmitting end may retransmit packet loss data once. When the buffer time is shorter, a task of packet loss recovery is relatively urgent, and timeliness of arrival of the packet loss data at the user terminal needs to be improved. Otherwise, frame freezing may occur in the user terminal. In this case, the transmitting end may recover previously lost data by using a relatively aggressive method, to ensure as much as possible that there is sufficient data for use at next stage (for example, audio/video playback) before the buffer time is consumed up. Compared with the indiscriminate packet loss retransmission policy in the conventional manner, the packet loss recovery method as referred to in this embodiment well balances a relationship between traffic transmission and packet loss recovery, optimizes terminal-side frame freezing caused by packet loss, and reduces an influence on subsequent traffic transmission efficiency, which helps improve user experience of audio/video-based Internet services and enhance competitiveness of server manufacturers.

In an embodiment, after receiving the target acknowledgement packet returned by the terminal, the method further includes: adjusting, when it is determined based on the target acknowledgement packet that packet loss does not occur in the media stream data, a transmission bitrate based on the recovery time of the packet loss and the buffer time in the target acknowledgement packet; or adjusting the transmission bitrate based on a preset frame quantity and a quantity of buffered frames in the target acknowledgement packet; and transmitting the media stream data to the terminal based on the transmission bitrate.

The transmission bitrate refers to a bitrate for transmitting the media stream data. That is, the server may select different bitrates to transmit target media stream data. For example, at the moment T1, the server transmits media stream data A to the terminal according to an original bitrate A1. After a period of time, at the moment T2, the server may select a bitrate A2 that is lower than the original bitrate A1 to transmit the media stream data A to the terminal, so that the server transmits as many audio/video frames as possible to the terminal with limited network resources.

The preset frame quantity is a preset quantity of frames. For example, the preset frame quantity may be preset to 10. That is, when the quantity of buffered frames in the target acknowledgement packet is less than the preset frame quantity 10, there are fewer audio/video frames buffered on the terminal side. In this case, the server needs to transmit as many audio/video frames as possible to manufacture the terminal with limited network resources, to prevent frame freezing and the like.

The quantity of buffered frames in the target acknowledgement packet is a quantity of frames buffered on the terminal side. For example, if the quantity of buffered frames in an application receiving queue of an application program playing back the media stream data is 30, the quantity of buffered frames in the target acknowledgement packet is 30.

Specifically, after the server receives the target acknowledgement packet returned by the terminal, when the server determines based on the target acknowledgement packet that packet loss does not occur in the media stream data, the server may adjust the transmission bitrate based on the recovery time of the packet loss and the buffer time in the target acknowledgement packet. Alternatively, the server may adjust the transmission bitrate based on the preset frame quantity and the quantity of buffered frames in the target acknowledgement packet. Further, the server may transmit the media stream data to the terminal based on the adaptive transmission bitrate.

For example, when the server determines, based on the target acknowledgement packet, that packet loss does not occur in the media stream data A, i.e., when the server detects no packet loss, if the buffer time l7_buffer_time_len in the buffer information info_17_buffer < the recovery time of the packet loss Time_threshold; or if the quantity of buffered frames l7_buffer_frame_amount in the buffer information info_l7_buffer< the preset quantity of frames l7_buffer_frame_amount_threshold, the terminal side has a shorter buffer time and fewer buffered audio/video frames. In this case, the server needs to transmit as many audio/video frames as possible with limited network resources. Therefore, the server may select an audio/video frame having a lower bitrate as a data source. For example, the server may record a bitrate of an audio/video frame transmitted in a past period of time bitrate_(i-1), and when the buffer time l7_buffer_time_len < the recovery time of the packet loss Time_threshold, or when the quantity of buffered frames l7_buffer_frame_amount < the preset frame quantity l7_buffer_frame_amount_threshold, the server may select a latest audio/video bitrate bitrate_i, where bitrate_i < bitrate_(i-1). That is, the server may transmit the media stream data A to the terminal based on the latest audio/video bitrate bitrate_i. l7_buffer_frame_amount_threshold may be configured by the administrator and declared in the configuration file. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and automatically adjusts the transmission bitrate when packet loss does not occur, thereby optimizing service experience.

In an embodiment, the operation of adjusting a transmission bitrate based on the recovery time of the packet loss and the buffer time in the target acknowledgement packet includes: reducing, when the buffer time in the target acknowledgement packet is less than the recovery time of the packet loss, an original bitrate value of the media stream data to obtain the transmission bitrate; and the adjusting the transmission bitrate based on a preset frame quantity and a quantity of buffered frames in the target acknowledgement packet includes: reducing, when the quantity of buffered frames in the target acknowledgement packet is less than the preset frame quantity, the original bitrate value of the media stream data to obtain the transmission bitrate.

The original bitrate value is an initial bitrate value in the process in which the server transmits the media stream data to the terminal. For example, in response to a traffic request packet of the terminal, the server selects a data source whose bitrate value is A1, and transmits the media stream data to the terminal based on the bitrate value A1. Therefore, the original bitrate value is A1.

Specifically, when the server determines based on the target acknowledgement packet that packet loss does not occur in the media stream data, the server may adjust the transmission bitrate based on the recovery time of the packet loss and the buffer time in the target acknowledgement packet. That is, when the buffer time in the target acknowledgement packet is less than the recovery time of the packet loss, the server may reduce the original bitrate value of the media stream data to obtain a reduced transmission bitrate. Alternatively, when the quantity of buffered frames in the target acknowledgement packet is less than the preset frame quantity, the server may reduce the original bitrate value of the media stream data to obtain the reduced transmission bitrate. That is, in the method provided in this application, when the buffer time is less than the recovery time of the packet loss and the quantity of buffered frames is less than the preset frame quantity, the terminal side has a shorter buffer time and fewer buffered audio/video frames. In this case, the server needs to transmit as many audio/video frames as possible with limited network resources. Therefore, the server needs to reduce the original bitrate value of the media stream data and transmit the media stream data to the terminal based on the reduced transmission bitrate. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and automatically adjusts the transmission bitrate when packet loss does not occur, thereby optimizing service experience.

In an embodiment, the transmission bitrate is a first bitrate value; and the method further includes: selecting the second bitrate value as the transmission bitrate when the buffer time in the target acknowledgement packet is greater than the recovery time of the packet loss, and the quantity of buffered frames in the target acknowledgement packet is greater than the preset frame quantity; where the second bitrate value is greater than the first bitrate value.

The second bitrate value and the first bitrate value are configured for distinguishing different bitrate values.

Specifically, when the server determines based on the target acknowledgement packet that packet loss does not occur in the media stream data, the server may adjust the transmission bitrate based on the recovery time of the packet loss and the buffer time in the target acknowledgement packet. That is, when the buffer time in the target acknowledgement packet is greater than the recovery time of the packet loss and the quantity of buffered frames in the target acknowledgement packet is greater than the preset frame quantity, the server may select the second bitrate value as the transmission bitrate; where the second bitrate value is greater than the first bitrate value. That is, in the method provided in this application, when the buffer time is greater than the recovery time of the packet loss and the quantity of buffered frames is greater than the preset frame quantity, the terminal side has a longer buffer time and more buffered audio/video frames. In this case, the server does not need to transmit as many audio/video frames as possible with limited network resources. Therefore, the server may increase the original bitrate value of the media stream data and transmit the media stream data to the terminal based on an increased transmission bitrate. In this way, the data transmitting end, that is, the server, may adaptively adjust the packet loss recovery policy according to the buffer information transmitted by the receiving end, that is, the terminal. The buffer information on the terminal side is added to the message acknowledgement packet, so that the server timely learns whether frame freezing (using an audio/video as an example) occurs (is to occur) on the terminal side, and automatically adjusts the transmission bitrate when packet loss does not occur, thereby optimizing service experience.

In an embodiment, the target acknowledgement packet carries an end frame identifier and a reception degree parameter of the media stream data; and the method further includes: continuously transmitting the end frame data to the terminal when the reception degree parameter satisfies a preset condition, end frame data corresponding to the end frame identifier is not transmitted completely, and a window configured for transmitting the media stream data is limited.

The end frame identifier is an identifier of the last audio/video frame in an application receiving queue of an application program playing back or using the media stream data. For example, if an identifier of the last audio/video frame of the media stream data A is f203, the end frame identifier of the media stream data carried in the target acknowledgement packet is f203.

The reception degree parameter is a reception degree parameter of the last audio/video frame in the application receiving queue of the application program playing back or using the media stream data. The reception degree parameter may be represented with frame_last_rcv. The reception degree parameter of the audio/video frame frame_last_rcv may be calculated based on two parameters: the quantity of packets that have been received currently frame_last_pkt_rcv_amount and the total quantity of packets of the audio/video frame frame_last_pkt_amount. For example, a calculation manner may be shown in the foregoing formula (3).

"The window is limited" refers to a limited window specified in a congestion control method. If the window is limited, no traffic packets can be transmitted until the window is no longer limited.

Specifically, when the server determines that the reception degree parameter of the end frame data of the transmitted media stream data satisfies the preset condition, the end frame data corresponding to the end frame identifier is not transmitted completely, and the window configured for transmitting the media stream data is limited, the server may temporarily ignore an effect of the limited window. That is, the server may continuously transmit the end frame data to the terminal until all remaining packets of the audio/video frame are transmitted to the terminal. That is, in this embodiment, in the process in which the server transmits the media stream data, the server may optimize the last audio/video frame frame_last received by the user terminal.

For example, if the quantity of packets that have been received currently frame_last_pkt_rcv_amount $\geq 1/2$ * the total quantity of packets of the audio/video frame frame_last_pkt_amount, more than half of the packets in the last audio/video frame have been received by the terminal. In this case, the server may determine whether the last audio/video frame frame_last_id has been transmitted. If the last audio/video frame frame_last_id has not been transmitted completely, the server may continuously transmit remaining content corresponding to the last audio/video frame frame_last_id. The foregoing process is not affected by the limited window. That is, if the window is limited and packets cannot be transmitted, consequently, the last audio/video frame on the terminal side cannot be completely received. In a serious case, problems such as frame freezing, screen blurring, and mosaics may occur on the terminal side. Before transmitting an audio/video frame, the server may know how many packets there are in total in this frame. For example, a video frame includes 20 packets in total, and packet numbers thereof are: 10 to 19, the server sequentially transmits the packets (numbers: 10 to 16), and the remaining packets (numbers: 17 to 19) may not be transmitted in time due to a reason such as a limited window. In this case, in the method provided in this embodiment of this application, the server can continuously execute an aggressive traffic transmission policy when the window is limited. That is, if the window is limited and more than half of the packets in the audio/video frame are transmitted, the server may automatically ignore the influence of the limited window and continuously transmit the remaining packets in the audio/video frame. Therefore, the last audio/video frame received by the user terminal is optimized, to ensure that the last audio/video frame on the terminal side can be completely received, thereby effectively preventing phenomena such as frame freezing, screen blurring, and mosaics on the terminal side, helping improve user experience of existing Internet services mainly based on audio/video, and improving competitiveness of server manufacturers.

In an embodiment, the operation of transmitting, according to the retransmission parameter, a lost media packet corresponding to the media stream data includes: transmitting the lost media packet to a routing node based on the retransmission parameter, and instructing, when the retransmission parameter satisfies a priority condition, the routing node to forward the lost media packet according to the priority condition.

Specifically, the terminal transmits the target acknowledgement packet to the server, so that when the server determines that packet loss occurs in the media stream data, the server may adjust the retransmission parameter based on the recovery time of the packet loss and the buffer time in the target acknowledgement packet, and before recovering the media stream data, the server transmits the lost media packet based on the adaptive retransmission parameter. That is, before recovering the media stream data, the server may transmit the lost media packet to the routing node based on the adaptive retransmission parameter. When the routing node detects that the retransmission parameter satisfies the priority condition, the routing node is instructed to forward the lost media packet according to the priority condition. That is, when the routing node detects that the retransmission parameter satisfies the priority condition, the routing node may adjust a processing priority of a packet including the lost media packet. For example, the routing node may set the processing priority of the packet including the lost media packet to a high priority, so that the routing node forwards the packet through a forwarding queue with a high priority. In this way, transmission efficiency of retransmitted packets can be improved, a waiting time of the user-side terminal for the packet loss can be reduced, and indexes such as audio/ video frame freezing can be optimized.

In an embodiment, the operation of transmitting the lost media packet to a routing node based on the retransmission parameter, and instructing, when the retransmission parameter satisfies a priority condition, the routing node to forward the lost media packet according to the priority condition includes: adding a target identification field to the lost media packet based on the retransmission parameter; and transmitting the lost media packet to the routing node based on the retransmission parameter, and instructing, when the target identification field is a target value, the routing node to preferentially forward the lost media packet; where when the target identification field is the target value, the retransmission parameter satisfies the priority condition.

The target identification field refers to an identification field that is preset as the target identification field. For example, the target identification field in this application may be set to loss_l7_buffer.

The target value means that a field value of the target identification field is a specific value. For example, the target value may be set to 1, and when the field value of the target identification field is 1, the field value of the target identification field is the target value.

Specifically, the server may add the target identification field to the lost media packet based on the retransmission parameter, transmit the lost media packet to the routing node based on the retransmission parameter, and instruct, when the target identification field is the target value, the routing node to preferentially forward the lost media packet; where when the target identification field is the target value, the retransmission parameter satisfies the priority condition.

For example, when the server determines that packet loss occurs in the media stream data and packet loss data needs to be retransmitted, the server may add a target identification field loss_l7_buffer to the packet pkt_loss, where the field occupies 1 bit. If a value of the target identification field loss_l7_buffer is a binary value 1, the retransmitted packet loss data is configured for alleviating the problem of frame freezing possibly caused by a short buffer time on the terminal side. That is, before a lost packet pkt_loss is retransmitted, the server may add the target identification field loss_l7_buffer to the packet pkt_loss = 1. After receiving the traffic packet pkt_loss, an intermediate network node checks whether the packet pkt_loss carries loss_l7_buffer whose value is the binary value 1. Details are as follows:

1) if the value of the identification field loss_l7_buffer carried in the packet pkt_loss is a binary value 0, that is, loss_17_buffer = 0, the routing node forwards the packet pkt_loss to a next-hop routing node in a normal packet processing manner; and

2) if the value of the identification field loss_l7_buffer carried in the packet pkt_loss is a binary value 1, that is, loss_17_buffer = 1, the routing node increases a processing priority (a smaller value is better) of the packet pkt_loss, which includes, but is not limited to,

a) setting, by the routing node, a forwarding priority of the packet pkt_loss to a high priority, which is specifically manifested as that the routing node forwards the packet pkt_loss by using a forwarding queue with a high priority; and

b) recording an original priority pri_original of the packet pkt_loss, and calculating a latest packet processing priority pri_new, as shown in the following formula (4):

$$pri\_new = pri\_origin - Q \ (4)$$

where Q>0 and is configured by the administrator, and if pri_origin-Q < 0, pri_new = 0, in which case the priority is the highest.

In this embodiment, during data forwarding, if the intermediate routing node encounters a packet loss recovery packet having a particular identifier and configured for preventing frame freezing of the terminal, a forwarding priority of the packet is improved, which improves forwarding efficiency of this type of packet and reduces a waiting time of the user terminal for packet loss data, thereby optimizing service experience.

In an embodiment, a data transmission system is provided. The system includes:

a server, configured to transmit media stream data to a terminal; and

the terminal, configured to query for, in a process of receiving the media stream data, a buffer time of the media stream data; encapsulate the buffer time in an acknowledgement packet to obtain a target acknowledgement packet; and transmit the target acknowledgement packet to the server.

The server is further configured to adjust, when it is determined that packet loss occurs in the media stream data, a retransmission parameter based on a recovery time of the packet loss and the buffer time in the target acknowledgement packet, and transmit, before recovering the media stream data, a lost media packet corresponding to the media stream data based on the adjusted retransmission parameter.

The terminal is further configured to receive the lost media packet transmitted by the server based on the retransmission parameter.

In an embodiment, the system further includes:

the server, further configured to transmit, before recovering the media stream data, the lost media packet to a routing node based on the retransmission parameter; and

a routing node, configured to forward, when the retransmission parameter satisfies a priority condition, the lost media packet according to the priority condition.

In an embodiment, the media stream data is buffered in an application receiving queue corresponding to an application program; and the system further includes:
the terminal, further configured to determine buffer information based on the media stream data in the application receiving queue; store the buffer information into a status information table corresponding to the application program; and query the status information table for the buffer time of the media stream data.

In an embodiment, the system further includes:
the terminal, further configured to delete an application status bar of the application program from the status information table when the application program is switched to a closed state; and add, when another application program is switched to an open state, an application status bar corresponding to an application identifier of the another application program to the status information table.

In an embodiment, the system further includes:
the terminal, further configured to encapsulate, when detecting that the buffer time in the status information table is updated, an updated buffer time in the acknowledgement packet to obtain the target acknowledgement packet.

In an embodiment, the system further includes:
the terminal, further configured to generate the acknowledgement packet when receiving the media stream data; and query for the buffer time of the media stream data when the acknowledgement packet is detected.

In an embodiment, the system further includes:

the terminal, further configured to acquire start frame data and end frame data of the media stream data from the application receiving queue; determine media buffer data based on the start frame data and the end frame data; and determine the buffer time according to a time interval between the start frame data and the end frame data.

In an embodiment, the system further includes:

the terminal, further configured to acquire a first timestamp of the start frame data and a second timestamp of the end frame data; the first timestamp being a playback time point of the start frame data in a player of the application program, and the second timestamp being a playback time point of the end frame data in the player; and determine the buffer time based on a difference between the second timestamp and the first timestamp.

In an embodiment, the system further includes:

the terminal, further configured to backhaul a preset quantity of target acknowledgement packets to the server when the buffer time is less than the recovery time of the packet loss; the recovery time of the packet loss being determined based on delay information of the media stream data during the transmission.

In an embodiment, the system further includes:

the server, further configured to compare the recovery time of the packet loss with the buffer time in the target acknowledgement packet, to obtain a comparison result; adjust a first retransmission parameter when the comparison result indicates that the buffer time is less than the recovery time of the packet loss; and adjust a second retransmission parameter when the comparison result indicates that the buffer time is greater than or equal to the recovery time of the packet loss.

In an embodiment, the system further includes:

the server, further configured to adjust, when determining based on the target acknowledgement packet that packet loss does not occur in the media stream data, a transmission bitrate based on the recovery time of the packet loss and the buffer time in the target acknowledgement packet; or adjust the transmission bitrate based on a preset frame quantity and a quantity of buffered frames in the target acknowledgement packet; and transmit the media stream data to the terminal based on the transmission bitrate; and

the terminal, further configured to receive the lost media packet transmitted by the server based on the retransmission parameter.

In an embodiment, the system further includes:

the server, further configured to reduce, when the buffer time in the target acknowledgement packet is less than the recovery time of the packet loss, an original bitrate value of the media stream data to obtain the transmission bitrate; and reduce, when the quantity of buffered frames in the target acknowledgement packet is less than the preset frame quantity, the original bitrate value of the media stream data to obtain the transmission bitrate.

In an embodiment, the transmission bitrate is a first bitrate value; and the system further includes:

the server, further configured to select the second bitrate value as the transmission bitrate when the buffer time in the target acknowledgement packet is greater than the recovery time of the packet loss, and the quantity of buffered frames in the target acknowledgement packet is greater than the preset frame quantity; where the second bitrate value is greater than the first bitrate value.

In an embodiment, the target acknowledgement packet carries an end frame identifier and a reception degree parameter of the media stream data; and the system further includes:

the server, further configured to continuously transmit the end frame data to the terminal when the reception degree parameter satisfies a preset condition, end frame data corresponding to the end frame identifier is not transmitted completely, and a window configured for transmitting the media stream data is limited.

In an embodiment, the system further includes:

the server, further configured to add a target identification field to the lost media packet based on the retransmission parameter; and transmit the lost media packet to a routing node based on the retransmission parameter; and

the routing node being configured to preferentially forward the lost media packet when the target identification field is a target value; where when the target identification field is the target value, the retransmission parameter satisfies a priority condition.

In an embodiment, this application further provides an application scenario. The foregoing data transmission method is applied to the application scenario. Specifically, application of the data transmission method in the application scenario is as follows:

When it is intended to quickly and effectively recover a network packet loss without affecting service experience on a user terminal side, the foregoing data transmission method may be used. That is, in scenarios such as audio/video on demand, a live streaming service, and real-time communication, a user terminal transmits a request packet to a server, so that the server transmits corresponding media stream data to the terminal in response to the request packet. In a process in which the user terminal receives the media stream data transmitted by the server, the user terminal may query for a buffer time of an application playing back the media stream data, and encapsulate the buffer time in an acknowledgement packet, to obtain a target acknowledgement packet. Further, the user terminal transmits the target acknowledgement packet to the server, so that when the server determines that packet loss occurs in the media stream data, the server adjusts a retransmission parameter based on a recovery time of the packet loss and the buffer time in the target acknowledgement packet, the server transmits, before recovering the media stream data, a lost media packet based on the retransmission parameter, and the user terminal receives the lost media packet transmitted by the server based on the retransmission parameter. Compared with the conventional method, the adaptive packet loss recovery method based on multi-party collaboration designed in this embodiment of this application well balances a relationship between traffic transmission and packet loss recovery, optimizes user-side frame freezing caused by packet loss, and reduces an influence on subsequent traffic transmission efficiency, which helps improve user experience of audio/video-based Internet services and enhance competitiveness of server manufacturers.

The method provided in this embodiment of this application may be applied to improvement in scenarios such as audio/video on demand, a live streaming service, and real-time communication. The data transmission method provided in this embodiment of this application is described below by using an audio/video-based Internet service scenario as an example.

TCP: Transport Control Protocol.

QUIC: Quick UDP Internet Connection.

QoE: Quality of Experience.

QoS: Quality of Services.

RTT: Round-trip time.

IP: Internet Protocol.

Network packet loss is an important factor affecting traffic transmission efficiency, and is also a key index affecting user service experience and evaluating quality of a cloud service provider. A higher packet loss rate may lead to deterioration in traffic transmission performance. That is, a data volume of the user terminal is relatively low within the same time, which may cause features that seriously affect user experience, such as buffering, frame freezing, screen blurring, mosaics, and a black screen, to occur during use of a terminal application. Therefore, ameliorating a packet loss rate of network transmission to further improve effective data throughput becomes a key breakthrough point for optimizing terminal-side service experience.

Conventional main approaches for reducing the packet loss rate and improving data transmission efficiency focus on the following two aspects: Firstly, congestion control algorithms better adjusting network environments and service types, such as BBR, Reno, and TIMELY, are researched, designed, and deployed. A core idea of these methods is to attempt to "accurately" identify whether a current network is congested, and if congestion occurs, appropriately reduce transmission parameters (such as transmission rates or transmission windows) to expect that packet loss does not occur any more or occurs as little as possible during subsequent traffic transmission. Secondly, from the perspective of protocol innovation, a latest network transmission protocol is designed, and traffic transmission efficiency is improved by using inherent advantages of the protocol. For example, for multipath transmission (such as MPTCP), a traffic transmission path is added to accelerate flow completion time, which may significantly improve user-side service experience in most scenarios. In another example, a UDP-based QUIC protocol improves end-to-end transmission performance by supporting 0-RTT and mitigating head-of-line blocking.

Nevertheless, in the foregoing solution, network congestion is only viewed from the perspective of the data transmitting end and the transmission policy is adjusted, and service experience of the user terminal cannot be fully considered. In fact, service experience of the user terminal is the most key factor for measuring a CDN manufacturer. In this case, if the packet loss rate is higher during traffic transmission, service experience on the user terminal side is not necessarily poor. A key factor for the user experience is whether network packet loss occurring is recovered in time within a period of time, frame freezing may not occur in an audio/video player of the terminal if recovery is performed in time.

FIG. 7 is a schematic diagram of packet loss and user-side frame freezing. In a reliable transmission protocol (such as a TCP or a QUIC), audio/video data transmission is used as an example. If a traffic packet is lost during transmission, the receiving end "notifies", by using a message acknowledgement packet, the transmitting end to retransmit the lost packet. In addition, the receiving end is in a status of "always waiting" for the lost packet, and perform audio/video playback on a subsequent traffic packet until the lost packet is received.

When a packet is lost, a recovery time is $T\_recovery$, a value of which may be measured by using the RTT and a packet loss detection time $T\_detect$, which is specifically: $T\_recovery = N * (RTT + T\_detect)$, where N is a quantity of times of recovery. Meanwhile, when a packet is lost, a data buffer time $T\_buffer$ thereof may be represented with a time interval between a timestamp of the first piece of available data and a timestamp of the last piece of available data in a queue. The "queue" includes a buffer queue of an application-layer player and a data receiving queue of a transmission layer. A "timestamp" of data refers to a playback time point of the data in a player, and is generally represented with a time interval from a certain (for example, the first) audio/video frame.

The timestamp of data may be understood as a playback time of the data on the player. For example, a timestamp of the first piece of data in a player queue is time_0, indicating that the player is to play back the data immediately. A timestamp of the last piece of data in the player queue is time_1, indicating that the data is to be played back at time_1, and a time interval between the foregoing two pieces of data is time_1-time_0. The "queue" herein includes at least one of a buffer queue of an application-layer player and a queue of a transmission layer. The former is in an audio/video application program and is configured for storing audio/video data to be played back immediately. The latter is in a mobile phone device and is configured for storing data received from a transmitting end and transferring the data to an audio/video application program queue.

In the foregoing example, whether frame freezing may occur when the terminal faces packet loss may be determined according to the following conditions:

if T_recovery≤T_buffer, packet loss may be recovered within the buffer time, in which case frame freezing does not occur in the player of the terminal; and

if T_recovery>T_buffer, packet loss has not been recovered when the data in the queue is not consumed up, in which case frame freezing may occur in the player of the terminal.

In conclusion, different packet loss may have different influences on QoE of a client. How to design a packet loss recovery mechanism for the different influences is to be a focus of the method designed in this application.

Therefore, to resolve the foregoing problem, this application provides a solution. That is, this application provides an adaptive packet loss recovery and traffic transmission method based on multi-party collaboration. In a manner of end-cloud collaboration, a user terminal is enabled to carry information such as a buffer time in a message acknowledgement packet, so that a transmitting end (a cloud server) may adaptively decide a packet loss retransmission policy according to a relationship between the buffer time and a recovery time of the packet loss. The method provided in this application may be configured for improving user experience in scenarios such as audio/video on demand, a live streaming service, and real-time communication, and belongs to the field of computer network transmission optimization. That is, when the user terminal feeds back the message acknowledgement packet to a data transmitting end, a buffer duration of an application buffer is carried. When detecting packet loss, the data transmitting end may adaptively adjust a packet loss recovery policy according to the data buffer duration on the user terminal side. In this process, if the buffer time is longer, the data transmitting end uses a "moderate" packet loss retransmission policy. If the buffer time is shorter, the data transmitting end uses an "aggressive" packet loss retransmission policy. If the buffer time is moderate, the data transmitting end adaptively adjusts the packet loss retransmission policy according to newly measured information such as an end-to-end delay and a packet loss rate. Compared with the indiscriminate packet loss retransmission policy in the conventional manner, the packet loss recovery method as referred to in this embodiment of this application well balances a relationship between traffic transmission and packet loss recovery, optimizes user-side frame freezing caused by packet loss, and reduces an influence on subsequent traffic transmission efficiency, which helps improve user experience of audio/video-based Internet services and enhance competitiveness of CDN manufacturers.

On a product side, an objective of the method provided in this application is to resolve the problem that the existing transmission protocol and congestion control algorithm does not consider "linkage" with service experience of the user terminal at the beginning of the design, resulting in that the data transmitting end "blindly" adjusts the transmission parameters and a good state of service experience of the client cannot be truly ensured, and an adaptive packet loss recovery method based on end-cloud collaboration is proposed. In this application, the user terminal carries information of a data buffer time of a current application layer (such as a player) when replying with the message acknowledgement packet. After receiving the buffer time, the data transmitting end (the cloud server) adaptively adjusts a retransmission policy for the previous lost packet. Specifically, when the buffer time is longer, a task of packet loss recovery is not urgent. In this case, the transmitting end may retransmit packet loss data once. When the buffer time is shorter, a task of packet loss recovery is relatively urgent, and timeliness of arrival of the packet loss data at the user terminal needs to be improved. Otherwise, frame freezing may occur in the user terminal. In this case, the transmitting end may recover previously lost data by using a relatively aggressive method, to ensure as much as possible that there is sufficient data for use at next stage (for example, audio/video playback) before the buffer time is consumed up.

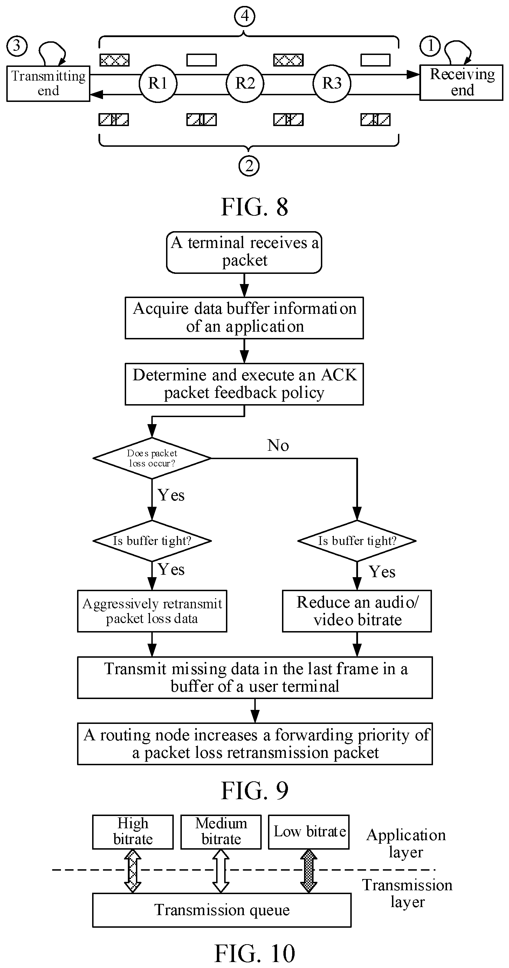

FIG. 8 is a schematic flowchart of an adaptive packet loss recovery and traffic transmission method based on multi-party collaboration. In FIG. 8, ① before receiving a traffic packet and feeding back a message acknowledgement packet to a transmitting end, a data receiving end queries for information such as buffer information (e.g., a buffer time, a quantity or a size of buffered packets) of an application corresponding to the traffic packet. ② The data receiving end embeds the buffer information into the message acknowledgement packet, and transmits the message acknowledgement packet to the data transmitting end. ③ The data transmitting end adjusts a packet loss recovery and transmission policy according to the buffer information of the user terminal after receiving the message acknowledgement packet. ④ An intermediate routing node, after receiving a packet loss recovery packet in a case in which buffer information of the terminal is relatively tense, improves a forwarding priority of the packet, enhances transmission efficiency of a retransmitted packet, reduces a waiting time of the user terminal for the data packet loss, and optimizes QoE indexes such as audio/video frame freezing.

The server in this embodiment of this application may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal may be a smart phone, a tablet computer, a notebook computer, a desktop computer, a smart speaker, a smart watch, and the like, but is not limited thereto. The terminal and the server may be directly or indirectly connected in a wired or wireless communication manner, which is not limited in this application.

On a technical side, FIG. 9 is a schematic flowchart of an overall process of an adaptive packet loss recovery and traffic transmission method based on multi-party collaboration according to this application. The idea of the method provided in this application is to enable the data transmitting end to adaptively adjust the packet loss recovery policy according to the buffer information of the receiving end. The buffer information of the user terminal is added to the message acknowledgement packet, so that the server timely learns whether frame freezing (using an audio/video as an example) occurs (is to occur) on the user terminal, and adjusts aggressiveness of packet loss recovery according to the information. At the same time, during data forwarding, if the intermediate routing node encounters a packet loss recovery packet having a particular identifier and configured for preventing frame freezing of the terminal, a forwarding priority of the packet is improved, which improves forwarding efficiency of this type of packet and reduces a waiting time of the user terminal for packet loss data, thereby optimizing service experience.

This is implemented specifically through the following technical solutions:

(1) The data receiving end (the user terminal) receives a traffic packet from the data transmitting end (the cloud server) and periodically transmits a message acknowledgement packet to the server. The packet carries data buffer information of the user terminal, which is specifically as follows:

1) Before transmitting a message acknowledgement packet pkt_ack to the cloud server, the user terminal acquires buffer information info_l7_buffer of an application receiving queue corresponding to an application layer, which includes, but is not limited to, the following:

a) a buffer duration l7_buffer_time_len of data in the application buffer queue;

b) a quantity of complete audio/video frames l7_buffer_frame_amount in the application buffer queue;

c) information of the last audio/video frame frame_last in the application buffer queue, which specifically includes:

• an identifier of the audio/video frame frame_last_id; and

• a reception degree parameter of the audio/video frame frame_last_rcv, specifically including a total quantity of packets of the audio/video frame frame_last_pkt_amount and a quantity of packets that have been received currently frame_last_pkt_rcv_amount;

• therefore, frame_last may be represented with the following formula (1):

$$\text{frame\_last} = \{\text{frame\_last\_id, frame\_last\_rcv}\} \quad (1)$$

and

d) therefore, application buffer information info_l7_buffer may be represented with the following formula (2):

$$\text{info\_l7\_buffer} = \{\text{l7\_buffer\_time\_len, l7\_buffer\_frame\_amount, frame\_last}\} \ (2)$$

2) To acquire the foregoing indexes, in the present disclosure, a monitoring module is added to the application layer, and is configured to periodically acquire the buffer information info_l7_buffer of the application receiving queue and feed back the buffer information to the transmission layer, as shown in the schematic diagram of monitoring of a user terminal in FIG. 4;

  a) in this embodiment, a time interval T_gain_l7 at which the terminal periodically acquires info_l7_buffer may be configured by the administrator and embodied in the configuration file, and T_gain_l7=5 ms by default;

  b) in this embodiment, the monitoring module of the user terminal is located between the application layer and the transmission layer, with a main objective of acquiring info_l7_buffer of different applications in time;

    in this embodiment, the monitoring module maintains a status table shown in FIG. 3 for a currently used application, and periodically updates info_l7_buffer of different applications in the table:

    when an application is closed, the user terminal deletes a corresponding application status entry from the above status information table; and when an application is opened, the user terminal adds a corresponding application status entry to the above status information table; and

  c) in this application, before transmitting the message acknowledgement packet pkt_ack to the server, the user terminal acquires info_l7_buffer of a corresponding application by using a monitoring module, and embeds info_l7_buffer into pkt_ack, to obtain a final message acknowledgement packet pkt_ack_l7_buffer.

(2) The user terminal decides a feedback policy for pkt_ack_l7_buffer according to info_l7_buffer of the user terminal, which is specifically as follows:

  1) If l7_buffer_time_len in info_l7_buffer is shorter, an aggressive policy is used when the user terminal backhauls pkt_ack_l7_buffer, specifically:

  a) if l7_buffer_time _len < Time_threshold, the user terminal uses an "aggressive" redundancy backhaul policy when backhauling pkt_ack_l7_buffer, that is, M identical pkt_ack_l7_buffer are backhauled to prevent loss of pkt_ack_l7_buffer during backhaul;

  b) Time_threshold may be set to a fixed value Time_threshold_value or may be set to a multiple of delay information, for example, Time_threshold=N * SRTT; and

  c) Time_threshold_value, N, and M are configured by the administrator, and take effect in the configuration file; by default, Time_threshold_value=200 ms, N=2, and M=3.

2) If the monitoring module detects that l7_buffer_time_len of an application is shorter and a determination condition is shown in operation 1), the transmission layer may be triggered to immediately reply with pkt_ack_l7_buffer, and judgment does not need to be made until pkt_ack is generated in the existing method, thereby preventing a phenomenon of delayed data transmission caused by excessively slow reply with pkt_ack;

  a) in an existing transmission protocol, after receiving traffic, the user terminal does not reply with one pkt_ack for each traffic packet, but replies, by "packaging" in an "aggregation" manner, whether some packets have been received, and the problem of delayed reply with the message acknowledgement packet can be effectively prevented by using operation 2) above; and

  b) that is, in this application, the packet pkt_ack may trigger acquisition of the latest info_l7_buffer and formation of pkt_ack_l7_buffer; alternatively, l7_buffer_time_len in the latest info_l7_buffer may trigger pkt_ack to generate pkt_ack_l7_buffer.

(3) After receiving the foregoing pkt_ack_l7_buffer, the data transmitting end (the cloud server) adaptively decides a retransmission policy and a traffic transmitting policy according to information info_l7_buffer, which is specifically as follows:

  1) If the data transmitting end detects that a packet is lost (packet loss is recorded as pkt_loss),

a) if l7_buffer_time _len in info_l7_buffer< Time_threshold, the transmitting end retransmits P identical packets pkt_loss;

b) a transmission time interval time_interval of the P packets pkt_loss may be configured by the administrator and embodied in the configuration manual; or configured according to a current network delay, and calculated by using time_interval = 1/P * SRTT;

c) a value of P is 4 by default, and the value may be configured by the administrator and declared in the configuration file; and

d) before the lost packet pkt_loss is retransmitted, the data transmitting end adds an identification field loss_l7_buffer to the packet, where the field occupies 1 bit. If a value is a binary value 1, the retransmitted packet loss is configured for alleviating the problem of frame freezing possibly caused by a shorter buffer time of a terminal application.

2) If the data transmitting end does not detect packet loss,

a) if l7_buffer_time_len in info_l7_buffer< Time_threshold or l7_buffer_frame_amount < l7_buffer_frame_amount_threshold, the user terminal has a shorter buffer time and fewer audio/video frames, in which case the data transmitting end needs to transmit as many audio/video frames as possible with limited network resources; where l7_buffer_frame_amount_threshold may be configured by the administrator and declared in the configuration file; if a duration of data buffered in a queue of a player in L7 is shorter, the player can soon finish playing back the remaining buffered data; particularly, if the player does not "notify" the transmitting end in time when finishing playing back the data in the buffer, problems such as frame freezing may occur; in fact, there may be a delay in the message acknowledgement packet fed back by the user terminal (for example, an ACK packet is replied after every 5 packets are received), and the backhauled packet may be lost; specifically, the data transmitting end selects an audio/video frame having a lower bitrate as a data source, and transmits the selected audio/video frame to the data receiving end; refer to operation b) for details;

b) the data transmitting end records an audio/video frame bitrate bitrate_(i-1) transmitted in a past period of time, and when the condition in operation a) is satisfied, the data transmitting end selects a latest audio/video bitrate bitrate_i, where bitrate_i < bitrate_(i-1);

c) when l7_buffer_time_len in info_l7_buffer> Time_threshold and l7_buffer_frame_amount > l7_buffer_frame_amount_threshold, the data transmitting end selects a latest audio/video bitrate bitrate_(i+1), where bitrate_(i+ 1) > bitrate_i; and

d) FIG. 10 is a schematic diagram of a data transmitting end adjusting a bitrate. The data transmitting end initially transmits audio/video content having a high bitrate to the user terminal, and after a period of time, the following conditions are satisfied: when l7_buffer_time_len < Time_threshold or l7_buffer_frame_amount < l7_buffer_frame_amount_threshold, the data transmitting end switches the audio/video content from the high bitrate to a medium bitrate; after a period of time, if l7_buffer_time_len < Time_threshold or l7_buffer_frame_amount < l7_buffer_frame_amount_threshold, the data transmitting end switches from the medium bitrate to a low bitrate; after a period of time, if l7_buffer_time_len> Time_threshold or 17_buffe r_frame_amount>l7_buffer_frame_amount_threshold, the data transmitting end switches from the medium bitrate to the high bitrate; for example, if 17_buffer_time_len > Time_threshold, and is less than three times Time_threshold, the data transmitting end selects the medium bitrate; and if 17_buffer_time_len > three times Time_threshold, the data transmitting end selects the high bitrate.

3) In addition, in the method provided in this application, the last audio/video frame frame_last received by the user terminal is optimized. Details are as follows:

a) if frame _last_pkt _rcv_amount ≥ 1/2 * frame_last_pkt_amount, more than half of the packets in the last audio/video frame have been received by the user terminal, in which case the data transmitting end determines whether the last audio/video frame frame_last_id has been transmitted, and if the last audio/-video frame frame_last_id has not been transmitted completely, the remaining content of the last audio/video frame corresponding to frame_last_id is continuously transmitted. The foregoing process is not affected by the limited window. That is, for the transmitting end, if the window is limited and packets cannot be continuously transmitted, consequently, the last audio/video frame on the user terminal side cannot be completely received. In a serious case, problems such as frame freezing, screen blurring, and mosaics may occur in the user terminal.

(4) After receiving the traffic packet, the intermediate network node checks whether the packet carries loss_l7_buffer with a binary value of 1, which is specifically as follows:

> 1) if loss_17_buffer carried in the packet is 0, the packet is forwarded to a next-hop routing node in a normal packet processing manner; and
> 2) if loss_l7_buffer carried in the packet is 1, the routing node increases a processing priority (a smaller value is better) of the packet, which includes, but is not limited to,
>
> > a) setting a forwarding priority of the packet to a high priority, which is specifically manifested as that the packet is forwarded by using a forwarding queue with a high priority; and
> >
> > b) recording an original priority pri_original of the packet, and calculating a latest packet processing priority pri_new, as shown in the following formula:

$$pri\_new = pri\_origin - Q$$

> > where Q>0 and is configured by the administrator, and if pri_origin-Q < 0, pri_new = 0, in which case the priority is the highest.

Beneficial effects achieved by the technical solutions provided in this application are as follows:
An objective of the technical solution in this application is to resolve the problem that the existing transmission protocol and congestion control algorithm does not consider "linkage" with service experience of the user terminal at the beginning of the design, resulting in that the data transmitting end "blindly" adjusts the transmission parameters and a good state of service experience of the client cannot be truly ensured, and an adaptive packet loss recovery method based on end-cloud collaboration is proposed. In this application, the user terminal carries information of a data buffer time of a current application layer (such as a player) when replying with the message acknowledgement packet. After receiving the buffer time, the data transmitting end (the cloud server) adaptively adjusts a retransmission policy for the previous lost packet. Specifically, when the buffer time is longer, a task of packet loss recovery is not urgent. In this case, the transmitting end may retransmit packet loss data once. When the buffer time is shorter, a task of packet loss recovery is relatively urgent, and timeliness of arrival of the packet loss data at the user terminal needs to be improved. Otherwise, frame freezing may occur in the user terminal. In this case, the transmitting end may recover previously lost data by using a relatively aggressive method, to ensure as much as possible that there is sufficient data for use at next stage (for example, audio/video playback) before the buffer time is consumed up. Compared with the indiscriminate packet loss retransmission policy in the conventional manner, the packet loss recovery method as referred to in the present disclosure well balances a relationship between traffic transmission and packet loss recovery, optimizes user-side frame freezing caused by packet loss, and reduces an influence on subsequent traffic transmission efficiency, which helps improve user experience of audio/video-based Internet services and enhance competitiveness of CDN manufacturers.

Although the various steps in the flowcharts involved in the embodiments as described above are shown in sequence as indicated by the arrows, these steps are not necessarily performed in the order indicated by the arrows. Unless otherwise explicitly specified in this application, execution of the steps is not strictly limited, and the steps may be performed in other sequences. Moreover, at least some of the steps in the flowcharts involved in the embodiments as described above may include multiple steps or multiple stages. These steps or stages are not necessarily performed at the same time, but may be performed at different times. These steps or stages are not necessarily performed in sequence, but may be performed in turn or in alternation with other steps or at least some of the steps or stages in other steps.

Based on the same inventive concept, embodiments of this application further provide a data transmission apparatus for implementing the foregoing data transmission method. The problem-solving implementation provided by the apparatus is similar to the implementation recorded in the above method. Therefore, the specific definitions in one or more embodiments of the data transmission apparatus provided below can be made reference to the above definitions in the data transmission method. Details are not described herein again.

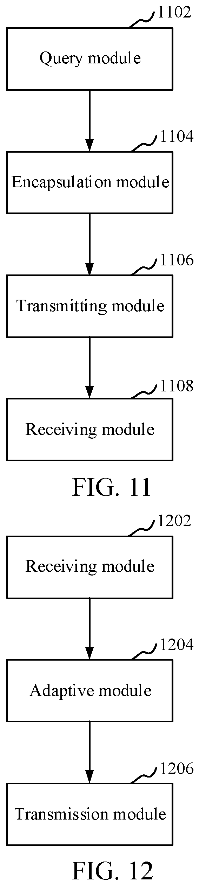

In an embodiment, as shown in FIG. 11, a data transmission apparatus is provided, including: a query module 1102, an encapsulation module 1104, a transmitting module 1106, and a receiving module 1108.

The query module 1102 is configured to query for, in a process of receiving media stream data, a buffer time of the media stream data.

The encapsulation module 1104 is configured to encapsulate the buffer time in an acknowledgement packet to obtain a target acknowledgement packet.

The transmitting module 1106 is configured to transmit the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the retransmission parameter.

The receiving module 1108 is configured to receive the lost media packet transmitted by the server based on the adjusted retransmission parameter.

In an embodiment, the media stream data is buffered in an application receiving queue corresponding to an application program; and The apparatus further includes: a determination module and a storage module, where the determination is configured to determine buffer information based on the media stream data in the application receiving queue; and the storage module is configured to store the buffer information into a status information table corresponding to the application program; and the query module is further configured to query the status information table for the buffer time of the media stream data.

In an embodiment, the apparatus further includes: a deletion module and an addition module, where the deletion module is configured to delete an application status bar of the application program from the status information table when the application program is switched to a closed state; and the addition module is configured to add, when another application program is switched to an open state, an application status bar corresponding to an application identifier of the another application program to the status information table.

In an embodiment, the encapsulation module is further configured to encapsulate, when detecting that the buffer time in the status information table is updated, an updated buffer time in the acknowledgement packet to obtain the target acknowledgement packet.

In an embodiment, the apparatus further includes: a generation module, configured to generate the acknowledgement packet when receiving the media stream data; and the query module is further configured to query for the buffer time of the media stream data when the acknowledgement packet is detected.

In an embodiment, the apparatus further includes: an acquisition module, configured to acquire start frame data and end frame data of the media stream data from the application receiving queue; and the determination module is further configured to determine media buffer data based on the start frame data and the end frame data; and determine the buffer time according to a time interval between the start frame data and the end frame data.

In an embodiment, the acquisition module is further configured to acquire a first timestamp of the start frame data and a second timestamp of the end frame data; the first timestamp being a playback time point of the start frame data in a player of the application program, and the second timestamp being a playback time point of the end frame data in the player; and the determination module is further configured to determine the buffer time based on a difference between the second timestamp and the first timestamp.

In an embodiment, the apparatus further includes: a transmission module, configured to transmit, before recovering the media stream data, the lost media packet to a routing node based on the retransmission parameter, and instruct, when the retransmission parameter satisfies a priority condition, the routing node to forward the lost media packet according to the priority condition.

In an embodiment, the transmission module is further configured to backhaul a preset quantity of target acknowledgement packets to the server when the buffer time is less than the recovery time of the packet loss; the recovery time of the packet loss being determined based on delay information of the media stream data during the transmission.

In an embodiment, as shown in FIG. 12, another data transmission apparatus is provided, including: a receiving module 1202, an adjustment module 1204, and a transmission module 1206.

The receiving module 1202 is configured to receive, in a process of transmitting media stream data to a terminal, a target acknowledgement packet returned by the terminal; the target acknowledgement packet carrying a buffer time of the terminal for the media stream data.

The adjustment module 1204 is configured to adjust, when it is determined based on the target acknowledgement packet that packet loss occurs in the media stream data, a retransmission parameter based on a recovery time of the packet loss and the buffer time in the target acknowledgement packet.

The transmission module 1206 is configured to transmit, according to the adjusted retransmission parameter, a lost media packet corresponding to the media stream data, so that the terminal receives the lost media packet before recovering the media stream data.

In an embodiment, the apparatus further includes: a comparison module, configured to compare the recovery time of the packet loss with the buffer time in the target acknowledgement packet, to obtain a comparison result; and the adjustment module is further configured to adjust a first retransmission parameter when the comparison result indicates that the buffer time is less than the recovery time of the packet loss; and adjust a second retransmission parameter when the comparison result indicates that the buffer time is greater than or equal to the recovery time of the packet loss.

In an embodiment, the adjustment module is further configured to adjust, when determining based on the target acknowledgement packet that packet loss does not occur in the media stream data, a transmission bitrate based on the recovery time of the packet loss and the buffer time in the target acknowledgement packet; or adjust the transmission bitrate based on a preset frame quantity and a quantity of buffered frames in the target acknowledgement packet; and The transmission module is further configured to transmit the media stream data to the terminal based on the transmission bitrate.

In an embodiment, the apparatus further includes: an adjustment module, configured to reduce, when the buffer time in the target acknowledgement packet is less than the recovery time of the packet loss, an original bitrate value of the media stream data to obtain the transmission bitrate; and reduce, when the quantity of buffered frames in the target acknowledgement packet is less than the preset frame quantity, the original bitrate value of the media stream data to obtain the transmission bitrate.

In an embodiment, the transmission bitrate is a first bitrate value; and the apparatus further includes: a selection module, configured to select the second bitrate value as the transmission bitrate when the buffer time in the target acknowledgement packet is greater than the recovery time of the packet loss, and the quantity of buffered frames in the target acknowledgement packet is greater than the preset frame quantity; where the second bitrate value is greater than the first bitrate value.

In an embodiment, the target acknowledgement packet carries an end frame identifier and a reception degree parameter of the media stream data; and the transmission module is further configured to continuously transmit the end frame data to the terminal when the reception degree parameter satisfies a preset condition, end frame data corresponding to the end frame identifier is not transmitted completely, and a window configured for transmitting the media stream data is limited.

In an embodiment, the transmission module is further configured to transmit the lost media packet to a routing node based on the retransmission parameter, and instructing, when the retransmission parameter satisfies a priority condition, the routing node to forward the lost media packet according to the priority condition.

In an embodiment, the apparatus further includes: a new module configured to add a target identification field to the lost media packet based on the retransmission parameter; and the transmission module is further configured to transmit the lost media packet to the routing node based on the retransmission parameter, and instruct, when the target identification field is a target value, the routing node to preferentially forward the lost media packet; where when the target identification field is the target value, the retransmission parameter satisfies a priority condition.

All or some of the modules in the data transmission apparatus may be implemented by software, hardware, and a combination thereof. The modules may be built in or stand alone from a processor in a computer device in a form of hardware, or may be stored in a memory in a computer device in a form of software, so that a processor can invoke and execute operations corresponding to the modules.

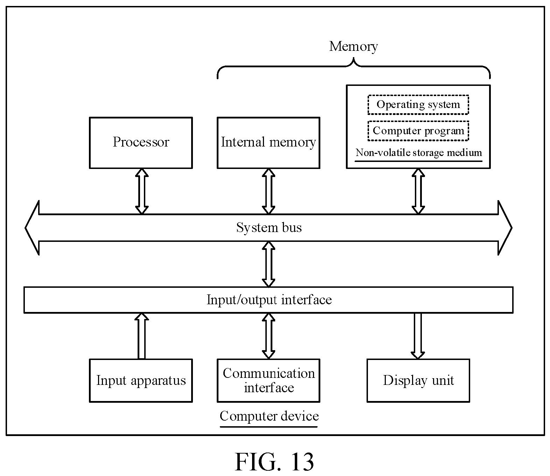

In an embodiment, a computer device is provided. The computer device may be a terminal or a server. In this embodiment, Description is based on an example in which the computer device is a terminal, and a diagram of an internal structure thereof may be shown in FIG. 13. The computer device includes a processor, a memory, an input/output interface, a communication interface, a display unit, and an input apparatus. The processor, the memory, and the input/output interface are connected to each other by using a system bus, and the communication interface, the display unit, and the input apparatus are connected to the system bus by using the input/output interface. The processor of the computer device is configured to provide calculation and control capabilities. The memory of the computer device includes a non-volatile storage medium and an internal memory. The non-volatile storage medium stores an operating system and computer programs. The internal memory provides an environment for operation of the operating system and the computer program in the non-volatile storage medium. The input/output interface of the computer device is configured to exchange information between the processor and the external device. The communication interface of the computer device is configured to communicate with an external terminal in a wired or wireless manner. The wireless manner may be implemented by WIFI, a mobile cellular network, near field communication (NFC), or another technology. The computer program, when executed by the processor, implements a data transmission method. The display unit of the computer device may be configured to form a visually visible screen and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, a mouse or the like.

A person skilled in the art may understand that the structure shown in FIG. 13 is merely a block diagram of a partial structure related to the solutions in this application, and does not constitute a limitation on a computer device to which the solutions in this application are applied. A specific computer device may include more or fewer components than those shown in the figure, or combine some components, or have different component arrangements.

In an embodiment, a computer device is provided, including a memory and a processor. The memory stores a computer program, and the computer program is executed by the processor to perform the steps in the foregoing method embodiments.

In an embodiment, a computer-readable storage medium is provided, having a computer program stored therein. The computer program, when executed by a processor, implements the steps in the foregoing method embodiments.

In an embodiment, a computer program product is provided, including a computer program. The computer program, when executed by a processor, implements the steps in the foregoing method embodiments.

User information (including, but not limited to, user equipment information, user personal information, and the like) and data (including, but not limited to, data for analysis, stored data, displayed data, and the like) involved in this application are all information and data authorized by users or fully authorized by all parties, and collection, use, and processing of relevant data need to comply with relevant laws, regulations, and standards of relevant countries and regions.

A person of ordinary skill in the art may understand that all or some of procedures of the method in the foregoing embodiments may be implemented by a computer program instructing relevant hardware. The program may be stored in a non-volatile computer-readable storage medium. When the program is executed, the procedures of the foregoing method embodiments may be implemented. References to the memory, the database, or another medium used in the embodiments provided in this application may all include at least one of a non-volatile and a volatile memory. The non-volatile memory may include a read-only memory (ROM), a magnetic tape, a floppy disk, a flash memory, an optical memory, a high-density embedded non-volatile memory, a resistive random-access memory (ReRAM), a magnetoresistive random-access memory (MRAM), a ferroelectric random-access memory (FRAM), a phase change memory (PCM), a graphene memory, and the like. The volatile memory may include a random-access memory (RAM) and an external cache. For the purpose of illustration but not limitation, RAM is available in many forms, for example, a static random access memory (SRAM) and a dynamic random access memory (DRAM). The database involved in various embodiments provided in this application may include at least one of a relational database and a non-relational database. The non-relational database may include, but is not limited to, a blockchain-based distributed database and the like. The processor involved in the various embodiments provided in this application may be a general-purpose processor, a central processing unit, a graphics processor, a digital signal processor, a programmable logic device, a data processing logic device based on quantum computing, o the like, and is not limited thereto.

Technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments show only several implementations of this application and are described in detail, which, however, are not to be construed as a limitation to the patent scope of this application. For a person of ordinary skill in the art, several transformations and improvements can be made without departing from the idea of this application. These transformations and improvements belong to the protection scope of this application. Therefore, the protection scope of this application shall be subject to the appended claims.

**Claims**

1. A data transmission method, performed by a terminal, the method comprising:

   querying for, in a process of receiving media stream data, a buffer time of the media stream data;
   encapsulating the buffer time in an acknowledgement packet to obtain a target acknowledgement packet;
   transmitting the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter; and
   receiving the lost media packet transmitted by the server based on the adjusted retransmission parameter.

2. The method according to claim 1, wherein the media stream data is buffered in an application receiving queue corresponding to an application program; before the querying for a buffer time of the media stream data, the method further comprises:

   determining buffer information based on the media stream data in the application receiving queue; and
   storing the buffer information into a status information table corresponding to the application program; and
   the querying for a buffer time of the media stream data comprises:
   querying the status information table for the buffer time of the media stream data.

3. The method according to claim 2, wherein before the querying for a buffer time of the media stream data, the method further comprises:

generating the acknowledgement packet when the media stream data is received;
the querying the status information table for the buffer time of the media stream data comprises:

querying the status information table for the buffer time of the media stream data when the acknowledgement packet is detected; and
the encapsulating the buffer time in an acknowledgement packet to obtain a target acknowledgement packet comprises:
encapsulating, when it is detected that the buffer time in the status information table is updated, an updated buffer time in the acknowledgement packet to obtain the target acknowledgement packet.

4. The method according to claim 2 or 3, wherein the determining buffer information based on the media stream data in the application receiving queue comprises:

acquiring start frame data and end frame data of the media stream data from the application receiving queue;
determining media buffer data based on the start frame data and the end frame data; and
determining the buffer time according to a time interval between the start frame data and the end frame data.

5. The method according to claim 4, wherein the determining the buffer time according to a time interval between the start frame data and the end frame data comprises:

acquiring a first timestamp of the start frame data and a second timestamp of the end frame data; the first timestamp being a playback time point of the start frame data in a player of the application program, and the second timestamp being a playback time point of the end frame data in the player; and
determining the buffer time based on a difference between the second timestamp and the first timestamp.

6. The method according to any one of claims 1 to 5, wherein the transmitting the target acknowledgement packet to the server comprises:

backhauling a preset quantity of target acknowledgement packets to the server when the buffer time is less than the recovery time of the packet loss; the recovery time of the packet loss being determined based on delay information of the media stream data during the transmission; and
the transmitting, before recovering the media stream data, a lost media packet based on the retransmission parameter comprises:
transmitting, before recovering the media stream data, the lost media packet to a routing node based on the retransmission parameter, and instructing, when the retransmission parameter satisfies a priority condition, the routing node to forward the lost media packet according to the priority condition.

7. A data transmission method, performed by a server, the method comprising:

receiving, in a process of transmitting media stream data to a terminal, a target acknowledgement packet returned by the terminal; the target acknowledgement packet carrying a buffer time of the terminal for the media stream data;
adjusting, when it is determined based on the target acknowledgement packet that packet loss occurs in the media stream data, a retransmission parameter based on a recovery time of the packet loss and the buffer time in the target acknowledgement packet; and
transmitting, according to the adjusted retransmission parameter, a lost media packet corresponding to the media stream data, so that the terminal receives the lost media packet before recovering the media stream data.

8. The method according to claim 7, wherein the adjusting a retransmission parameter based on a recovery time of the packet loss and the buffer time in the target acknowledgement packet comprises:

comparing the recovery time of the packet loss with the buffer time in the target acknowledgement packet, to obtain a comparison result;
adjusting a first retransmission parameter when the comparison result indicates that the buffer time is less than the recovery time of the packet loss; and
adjusting a second retransmission parameter when the comparison result indicates that the buffer time is greater than or equal to the recovery time of the packet loss.

9. The method according to claim 7 or 8, wherein after the receiving a target acknowledgement packet returned by the terminal, the method further comprises:

adjusting, when it is determined based on the target acknowledgement packet that packet loss does not occur in the media stream data, a transmission bitrate based on the recovery time of the packet loss and the buffer time in the target acknowledgement packet; or adjusting the transmission bitrate based on a preset frame quantity and a quantity of buffered frames in the target acknowledgement packet; and
transmitting the media stream data to the terminal based on the transmission bitrate.

10. The method according to claim 9, wherein the adjusting a transmission bitrate based on the recovery time of the packet loss and the buffer time in the target acknowledgement packet comprises:

reducing, when the buffer time in the target acknowledgement packet is less than the recovery time of the packet loss, an original bitrate value of the media stream data to obtain the transmission bitrate; and
the adjusting the transmission bitrate based on a preset frame quantity and a quantity of buffered frames in the target acknowledgement packet comprises:
reducing, when the quantity of buffered frames in the target acknowledgement packet is less than the preset frame quantity, the original bitrate value of the media stream data to obtain the transmission bitrate.

11. The method according to claim 10, wherein the transmission bitrate is a first bitrate value; and the method further comprises:
selecting a second bitrate value as the transmission bitrate when the buffer time in the target acknowledgement packet is greater than the recovery time of the packet loss and the quantity of buffered frames in the target acknowledgement packet is greater than the preset frame quantity; wherein the second bitrate value is greater than the first bitrate value.

12. The method according to any one of claims 7 to 11, wherein the target acknowledgement packet carries an end frame identifier and a reception degree parameter of the media stream data; and the method further comprises:
continuously transmitting the end frame data to the terminal when the reception degree parameter satisfies a preset condition, end frame data corresponding to the end frame identifier is not transmitted completely, and a window configured for transmitting the media stream data is limited.

13. The method according to any one of claims 7 to 11, wherein the transmitting, according to the retransmission parameter, a lost media packet corresponding to the media stream data comprises:
transmitting the lost media packet to a routing node based on the retransmission parameter, and instructing, when the retransmission parameter satisfies a priority condition, the routing node to forward the lost media packet according to the priority condition.

14. The method according to claim 13, wherein the transmitting the lost media packet to a routing node based on the retransmission parameter, and instructing, when the retransmission parameter satisfies a priority condition, the routing node to forward the lost media packet according to the priority condition comprises:

adding a target identification field to the lost media packet based on the retransmission parameter; and
transmitting the lost media packet to the routing node based on the retransmission parameter, and instructing, when the target identification field is a target value, the routing node to preferentially forward the lost media packet; wherein when the target identification field is the target value, the retransmission parameter satisfies the priority condition.

15. A data transmission apparatus, comprising:

a query module, configured to query for, in a process of receiving media stream data, a buffer time of the media stream data;
an encapsulation module, configured to encapsulate the buffer time in an acknowledgement packet to obtain a target acknowledgement packet;
a transmitting module, configured to transmit the target acknowledgement packet to the server, to cause the server to adjust, when it is determined that packet loss occurs in the media stream data, a retransmission parameter based on a recovery time of the packet loss and the buffer time in the target acknowledgement packet, and transmit, before recovering the media stream data, a lost media packet based on the adjusted retransmission parameter; and

a receiving module, configured to receive the lost media packet transmitted by the server based on the adjusted retransmission parameter.

16. A data transmission apparatus, comprising:

a receiving module, configured to receive, in a process of transmitting media stream data to a terminal, a target acknowledgement packet returned by the terminal; the target acknowledgement packet carrying a buffer time of the terminal for the media stream data;

an adjustment module, configured to adjust, when it is determined based on the target acknowledgement packet that packet loss occurs in the media stream data, a retransmission parameter based on a recovery time of the packet loss and the buffer time in the target acknowledgement packet; and

a transmission module, configured to transmit, according to the adjusted retransmission parameter, a lost media packet corresponding to the media stream data, so that the terminal receives the lost media packet before recovering the media stream data.

17. A data transmission system, comprising:

a server, configured to transmit media stream data to a terminal;

the terminal, configured to query for, in a process of receiving the media stream data, a buffer time of the media stream data; encapsulate the buffer time in an acknowledgement packet to obtain a target acknowledgement packet; and transmit the target acknowledgement packet to the server;

the server being further configured to adjust, when it is determined that packet loss occurs in the media stream data, a retransmission parameter based on a recovery time of the packet loss and the buffer time in the target acknowledgement packet, and transmit, before recovering the media stream data, a lost media packet corresponding to the media stream data based on the adjusted retransmission parameter; and

the terminal being further configured to receive the lost media packet transmitted by the server based on the adjusted retransmission parameter.

18. A computer device, comprising a memory and a processor, the memory storing a computer program, and the processor implementing operations of the method according to any of claims 1 to 6 or claims 7 to 14 when executing the computer program.

19. A computer-readable storage medium, having a computer program stored therein, operations of the method according to any of claims 1 to 6 or claims 7 to 14 being implemented when the computer program is executed by a processor.

20. A computer program product, comprising a computer program, operations of the method according to any of claims 1 to 6 or claims 7 to 14 being implemented when the computer program is executed by a processor.

FIG. 1

202

Query for, in a process in which media stream data transmitted by a server is received, a buffer time of the media stream data

204

Encapsulate the buffer time in an acknowledgement packet to obtain a target acknowledgement packet

206

Transmit the target acknowledgement packet to the server, so that the server adapts to, when determining that packet loss occurs in the media stream data, a packet loss retransmission parameter based on a packet loss recovery time and the buffer time in the target acknowledgement packet, and transmits, before recovering the media stream data, a lost media packet based on the packet loss retransmission parameter

208

Receive the lost media packet transmitted by the server based on the packet loss retransmission parameter

FIG. 2a

Server                    Terminal

Media stream data          Query for a
─────────────────►         buffer time of the
                           media stream
                           data

Target acknowledgement     Encapsulate the
        packet             buffer time in an
◄─────────────────         acknowledgemen
                           t packet

Determine whether
packet loss occurs

If the et loss occurs, adapt to a
packet loss retransmission
parameter based on a packet          Recover the
loss recovery time and the           media stream
buffer time                          data according to
                                     the lost media
Transmit a lost media packet         packet
based on the packet loss    ─────►
retransmission parameter

## FIG. 2b

| Application identifier | Info_l7_buffer (buffer information) | Update time |
|---|---|---|
| Application identifier 1 | Info_l7_buffer_1 | Time_1 |
| Application identifier 2 | Info_l7_buffer_2 | Time_2 |
| … | … | … |
| Application identifier w | Info_l7_buffer_w | Time_w |

## FIG. 3

Application 1   Application 2   ...   Application n         Application
                                                            layer
Info_l7_buffer        Info_l7_buffer

─ ─ ─ ─ ─ ─ ─ ─ ─ Monitoring module ─ ─ ─ ─ ─ ─ ─ ─ ─

                                                            Transmission
                                                            layer
Pkt_ack              Pkt_ack_l7_buffer

## FIG. 4

502

Acquire start frame data and end frame data of the media stream data from the application receiving queue

504

Determine media buffer data based on the start frame data and the end frame data

506

Determine the buffer time according to a time interval between the start frame data and the end frame data

## FIG. 5

602

Receive, in a process in which media stream data is transmitted to a terminal, a target acknowledgement packet returned by the terminal; the target acknowledgement packet carrying a buffer time of the terminal for the media stream data

604

Adapt to, when it is determined based on the target acknowledgement packet that packet loss occurs in the media stream data, a packet loss retransmission parameter based on a packet loss recovery time and the buffer time in the target acknowledgement packet

606

Transmit, according to the packet loss retransmission parameter, a lost media packet corresponding to the media stream data, so that the terminal receives the lost media packet before recovering the media stream data

## FIG. 6

Traffic packet   Packet loss   Message acknowledgement packet   Player

Buffer time T_buffer

Transmission queue

R1   R2   R3

Transmitting end   Receiving end

## FIG. 7

④

③ ⟲

| Transmitting end | → R1 → R2 → R3 → | Receiving end | ① ⟲ |

②

FIG. 8

A terminal receives a packet

Acquire data buffer information of an application

Determine and execute an ACK packet feedback policy

Does packet loss occur?

No

Yes

Is buffer tight?

Yes

Is buffer tight?

Yes

Aggressively retransmit packet loss data

Reduce an audio/ video bitrate

Transmit missing data in the last frame in a buffer of a user terminal

A routing node increases a forwarding priority of a packet loss retransmission packet

FIG. 9

| High bitrate | Medium bitrate | Low bitrate | Application layer |

Transmission queue

Transmission layer

FIG. 10

~1102

Query module

↓

~1104

Encapsulation module

↓

~1106

Transmitting module

↓

~1108

Receiving module

## FIG. 11

~1202

Receiving module

↓

~1204

Adaptive module

↓

~1206

Transmission module

## FIG. 12

FIG. 13

## INTERNATIONAL SEARCH REPORT

| International application No. |
| --- |
| **PCT/CN2024/086929** |

| A. | CLASSIFICATION OF SUBJECT MATTER |
| --- | --- |

H04L 65/80(2022.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, VEN, CNTXT, ENTXTC, ENTXT, CNKI, IEEE: 丢包, 丢失, 多媒体, 缓冲, 缓存, 流媒体, 媒体流, 媒体数据, 时长, 时间, 长度, 修复, 重传, media, packet loss, retransmission, buffer time, recover

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111385241 A (BEIJING VIAZIJING VISION TECHNOLOGY CO., LTD.) 07 July 2020 (2020-07-07) entire document | 1-20 |
| A | CN 114025389 A (NETEASE (HANGZHOU) NETWORK CO., LTD.) 08 February 2022 (2022-02-08) entire document | 1-20 |
| A | CN 106850595 A (FIBERHOME TELECOMMUNICATION TECHNOLOGIES CO., LTD.) 13 June 2017 (2017-06-13) entire document | 1-20 |
| A | US 2019104079 A1 (TENCENT TECHNOLOGY (SHENZHEN) CO., LTD.) 04 April 2019 (2019-04-04) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 July 2024** | **12 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086929**

| Patent document cited in search report | | | Publication date (day/month/year) | Patent family member(s) | | | Publication date (day/month/year) |
|---|---|---|---|---|---|---|---|
| CN | 111385241 | A | 07 July 2020 | None | | | |
| CN | 114025389 | A | 08 February 2022 | None | | | |
| CN | 106850595 | A | 13 June 2017 | WO | 2018133478 | A1 | 26 July 2018 |
| US | 2019104079 | A1 | 04 April 2019 | US | 10693799 | B2 | 23 June 2020 |
| | | | | WO | 2018054171 | A1 | 29 March 2018 |
| | | | | EP | 3490199 | A1 | 29 May 2019 |
| | | | | EP | 3490199 | A4 | 20 November 2019 |
| | | | | EP | 3490199 | B1 | 21 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 2023106768269